# EUROPEAN PATENT SPECIFICATION

(11) **EP 1 986 392 B1**
(45) Date of publication and mention of the grant of the patent: **03.10.2012**
(21) Application number: 07300997.9
(22) Date of filing: 26.04.2007
(51) Int. Cl.: H04L 29/06

(54) **Method for route optimization between mobile entities**
Verfahren zur Routenoptimierung zwischen mobilen Entitäten
Procédé d'optimisation d'acheminement entre entités mobiles

(43) Date of publication of application: 29.10.2008
(73) Proprietor: Motorola Solutions, Inc., Schaumburg IL 60196 (US)
(72) Inventor: Janneteau, Christophe, 78390 Bois d'Arcy (FR); Pandey, Aparna, Chicago, Illinois 60611 (US); Popovich, George, Palatine, Illinois 60067 (US)
(74) Representative: Treleven, Colin

(56) References cited:
- US-A1- 2006 215 631
- WONG K D ET AL: "Simultaneous Mobility in MIPv6" ELECTRO INFORMATION TECHNOLOGY, 2005 IEEE INTERNATIONAL CONFERENCE ON LINCOLN, NE, USA 22-25 MAY 2005, PISCATAWAY, NJ, USA,IEEE, 22 May 2005 (2005-05-22), pages 1-5, XP010913397 ISBN: 0-7803-9232-9
- PERKINS C ET AL: "Route Optimization in Mobile IP. draft-ietf-mobileip-optim-09.txt", INTERNET CITATION, 15 February 2000 (2000-02-15), XP002151964, Retrieved from the Internet: URL:http://www.ietf.org/internet-drafts/dr aft-ietf-mobileip-optim-09.txt [retrieved on 2000-11-03]

## Description

### FIELD OF THE INVENTION

The present invention relates generally to mobility management systems and more specifically to route optimization between two mobile entities.

### BACKGROUND OF THE INVENTION

There has been an increasing use of mobility management systems that utilize a client/server approach to mobility management of entities that are coupled to the system. One goal of these systems is to provide a solution for seamless mobility on a network such as, for instance, the global Internet or a private network, that is scalable, robust and secure, and that allows mobile routers or mobile nodes (together referred to herein as "mobile entities"). Mobile entities can be, for instance, wirelessly connected radios, phones, laptops, PDAs, etc., to maintain ongoing communications while changing their point of attachment to the network. Specifically, each mobile entity is always identified by its home address (HoA) (regardless of its current point of attachment to the network), which provides information about its point of attachment to a home network. However, when the mobile entity is connected to the network outside of its home network, i.e. when visiting a foreign network or a foreign domain, the mobile entity is also associated with a care-of address (CoA) that provides information about its current point of attachment. Those of ordinary skill in the art should realize that the term "care-of address" is not meant to be limited to any particular client/server mobility mechanism but covers other terms used in the art that describe a topologically correct address such as, for instance, a "point-of-presence address."

Typically, such systems can include one or more agents and mobility routers that utilize a protocol for facilitating the mobility management of the mobile entities (mobile routers and/or mobile nodes). The mobility router is an entity, on the mobile entity's home network that tunnels data packets for delivery to the mobile entity, and maintains current location information fur the mobile entity for proper delivery by a serving agent.

A mobile internet protocol (Mobile IP) enabled system is one well known example in the art of a mobility management system. Presently there are two standard implementations of Mobile IP, MIPv4 and MIPv6, with corresponding Network MObility extensions thereof, NEMOv4 and NEMOv6, which define support for enabling mobility management for mobile networks (i.e. mobile routers and their attached nodes). NEMO protocols may also define a dynamic prefix allocation mechanism for enabling the mobile router to dynamically configure a Mobile Network Prefix (MNP) for its mobile network; where the MNP can be defined as a bit string that consists of some number of initial bits of an IP address which identifies the entire mobile network within the IP topology. All nodes in a mobile network necessarily have an address containing this prefix.

The article 'Simultaneous Mobility in MIPv6', by Wong, K. D, et al: Electro Information Technology, 2005 IEEE International Conference On Lincoln, NE, USA, 22-25 May 2005, Piscataway, NJ, USA, IEEE, 22 May 2005, pages 1-5, XP010913397 ISNB: 0-7803-9232-9" describes an IPv6 procedure for route optimization, which allows packets from the correspondent host to go directly to the mobile host. United States patent publication US 2006/215631 A1 describes a communication between a source terminal and a mobile terminal that bypasses a home agent.

Mobile IP protocols provide IP mobility for mobile nodes and mobile networks (i.e. a mobile router and its attached IP subnet) respectively. Mobile IP provides for a registration process for registering a care-of address with a mobility server called a home agent (HA) whose point of attachment, i.e., its IP address, is in the mobile node's home network. The home agent registration is what enables the home agent to send the data packets destined for the mobile node, i.e., outbound data packets, through a tunnel to the care-of address. After arriving at the end of the tunnel, each data packet is then delivered to the mobile node. Such tunneling is uses to deliver both inbound and outbound data packets through the mobile node's home agent.

However, there may be shortcoming to have all data packets go through the mobile node's home agent. There may be some situations where peer-to-peer communications (i.e., wherein data packets are not routed through a mobile node's home agent) may he desired when tunneling is being implemented so as to prevent data from being routed along paths that are significantly longer than optimal. For example, if a mobile node is visiting some subnet, even data packets from another mobile node on the same subnet must be routed through the mobile node's home agent (on its home network), only then to be tunneled back to the original subnet for final delivery. This indirect routing delays the delivery of the datagrams to mobile nodes, and places an unnecessary burden on the networks and routers along their paths. Hence, one major limitation of the Mobile-IP and NEMO protocols tunneling scheme is the suboptimal routing due to the forwarding of packets via the HA. This issue is particularly critical in the case of communications between two mobile entities (MEs), especially when the two MEs are topologically-close one to the other but are far away from the HA(s). A typical example of the latter scenario is the case of two firemen at an incident scene.

One way known in the art of implementing peer-to-peer communication when tunneling is implemented is through route optimization. Route optimization provides a means for a correspondent node to maintain a binding cache containing the care-of address of one or more mobile nodes. When sending data to a mobile node, if the sender has a binding cache entry for the destination mobile node, it may tunnel the data directly to the care-of address indicated in the cached mobility binding. In the absence of any binding cache entry, data destined for a mobile node will be routed to the mobile node's home network and then tunneled to the mobile node's care-of address by the mobile node's home agent in accordance with standard Mobile IP.

One shortcoming of route optimization known in the art is the high signaling overhead associated with rendering the route optimization secure. Indeed, before placing a binding between a mobile entity's home address and care-of address in its binding cache, a correspondent node must ensure that both addresses belong to the mobile node for which the binding is provided. This is known as the address ownership problem, which if not solved may introduce various types of attacks such as traffic redirection attacks.

At present MIPv4, NEMOv4, and NEMOv6 protocols from the IETF do not support route optimization. MIPv6 supports route optimization between a correspondent node (that may also be a mobile node) and a mobile node, but at the cost of very high signaling overhead: six messages are required for MN-CN (Mobile Node-Correspondent Node) route optimization, to be exchanged each time the MN changes IP subnet. This message overhead is also doubled for route optimization between two mobile nodes. In addition this procedure cannot support route optimization for mobile routers. Other alternatives known in the art either lack scalability (e.g. assume an existing security association between any MN or a MN's HA and any CN), or do not support mobile routers, or require specific extensions in the visited network which obviously limits the ability to deploy such a system.

What is needed is a technique for optimizing the routing between two mobile entities that is secure, efficient, and can be easily implemented. As far as security is concerned, a correspondent node should be capable of verifying that the node sending route optimization messaging is authorized to do so for the home address in order to avoid risk or traffic redirection attacks. As far as efficiency is concerned, a secure route optimization process should introduce minimal signaling overhead. As far as implementation is concerned, a network managing a fleet of mobile entities should be able to control when route optimization is to be realized between any two of its mobile entities. This would allow for any type of route optimization triggering policies to be supported by the network.

Currently there is no prior art providing such a secure, efficient and manageable route optimization between mobile entities, be they mobile nodes or mobile routers. Thus, there exists a need for a technique to provide a secure, efficient and manageable route optimization for one mobile entity to tunnel data packets to a second mobile entity, for instance on the same subnet, without the need for the data packets to be first sent to the mobile entity's home agent. It is further desirable that the solution be compatible with mobile IP environments.

### STATEMENT OF THE INVENTION

Accordingly, the present invention seeks to preferably mitigate, alleviate or eliminate one or more of the above mentioned disadvantages singly or in any combination.

According to a first aspect of the invention there is provided a method in accordance with claim 1.

According to another aspect of the invention there is provided a network for route optimization between at least two mobile entities in accordance with claim 20.

These and other aspects, features and advantages of the invention will be apparent from and elucidated with reference to the embodiment(s) described hereinafter.

### BRIEF DESCRIPTION OF THE FIGURES

The features of the present invention, which are believed to be novel, are set forth with particularity in the appended claims. The invention, together with further objects and advantages thereof, may best be understood by making reference to the following description, taken in conjunction with the accompanying drawings, in the several figures of which like reference numerals identify identical elements, wherein:
FIG. 1 illustrates a simple block diagram of communication system that may be used to implement an embodiment of the present invention;
FIG. 2 illustrates a flow diagram of the signaling operation for route optimization notification in accordance with an embodiment of the present invention;
FIG. 3 illustrates a flow diagram of route optimization in accordance with a first embodiment of the present invention;
FIG. 4 illustrates a flow diagram of route optimization in accordance with another embodiment of the present invention;
FIG. 5 illustrates a flow diagram of the signaling operation for route optimization request and reply in accordance with an embodiment of the present invention;
FIG. 6 illustrates a flow diagram of a variation of the signaling operation for route optimization notification in accordance with an embodiment of the present invention;
FIG. 7 illustrates a simple block diagram of an exemplary route optimization system that may be used to implement an embodiment of the present invention;
FIG. 8 illustrates a flow diagram of the signaling operation of the system of FIG. 7;
FIG. 9 illustrates a flow diagram of an alternate signaling operation of the system of FIG. 7;
FIG. 10 illustrates a flow diagram of a first trigger mode used in the present invention;
FIG. 11 illustrates a flow diagram of a second trigger mode used in the present invention;
FIG. 12 illustrates a flow diagram of a third trigger mode used in the present invention;
FIG. 13 illustrates a flow diagram of a fourth trigger mode used in the present invention;
FIG. 14 illustrates a mobility header, in accordance with the present invention;
FIG. 15 illustrates a ROI Request, in accordance with the present invention;
FIG. 16 illustrates a ROI Reply, in accordance with the present invention;
FIG. 17 illustrates a Mobile Network Prefix mobility option, in accordance with the present invention;
FIG. 18 illustrates a ROI Sequence Number mobility option, in accordance with the present invention;
FIG. 19 illustrates a ROI Notify, in accordance with the present invention; and
FIG. 20 illustrates a ROI Notify Cache entry, in accordance with the present invention.

### DETAILED DESCRIPTION OF THE INVENTION

The present invention provides a technique for optimizing the routing between two mobile entities that is secure, efficient, and can be easily implemented. A mobile entity verifies that the node sending route optimization messaging is authorized to do so for the home address in order to avoid risk or traffic redirection attacks. As far as efficiency is concerned, a secure route optimization process is implemented in the present invention that introduces minimal signaling overhead. As a result, a network managing a fleet of mobile entities is able to control when route optimization is to be realized between any two of its mobile entities, which allows for any type of route optimization triggering policies to be supported by the network. In particular, the present invention provides a secure, efficient and manageable route optimization for one mobile entity (mobile node or mobile router) to tunnel data packets to a second mobile entity without the need for the data packets to be first sent to the mobile entity's home agent, while being compatible with mobile IP environments.

In operation, the present invention relies on the re-use of existing security association between a mobile entity and its home agent, which is very simple to implement and provides stronger security than other methods known in the art. The secure route optimization solution of the present invention is much more efficient than any of the other solutions know in the art. Indeed, only two messages may be sufficient for providing (secure) route optimization information to a mobile entity in the case where the process is initialized by the mobile entity, and only one message may be sufficient in the case where the process is initiated by the network.

The present invention provides a network with the control of the route optimization process and allows for any type of route optimization triggering policies to be supported, without requiring any extension/modification to the visited network. The solution is applicable both to mobile nodes and mobile routers referred herein as mobile entities (ME); both in IPv4 or IPv6 environments. In addition, this scheme works for both Collocated Care of Address mode and Foreign Agent-CoA mode of operation for MIPv4. Further, it provides a means of Route Optimization between mobile entities using either of these modes. The present invention also enables route-optimization for inter-agency communications, using techniques for HAs of different domains to dynamically discover each other, and securely exchange information therebetween for enabling route optimization between MEs served by HAs in different domains.

In practice, the present invention leverages an existing (Mobile-IP) security association between a mobile entity (ME) and its home agent (HA) for securely delivering route optimization information from the ME's HA to the ME. Said route optimization information refers to other mobile entities (e.g. home address/care-of address binding of another mobile entity).

The present invention discloses the use of a novel Route Optimization Information Notification (ROI_NOTIFY) message from a Home Agent to one of its Mobile Entities. The message includes the necessary information for the mobile entity to send data packets to another mobile entity that is possibly attached to a different Home Agent along an optimized routing path. The information in the ROI_NOTIFY message typically includes a target ME home address (HoA), mobile network prefix (MNP) if the target ME is a mobile router, care-of address (CoA), and a lifetime. Using the information contained in the ROI_NOTIFY message, the ME will configure its IP stack to route data packets to the target ME along an optimized path. Various embodiments are described herein, considering both IPv4 and IPv6 contexts.

The present invention also introduces novel ROI_REQUEST and ROI_REPLY messages for requesting route optimization information, and a novel Route Optimization Control Function for facilitating route optimization with multiple Home Agents. In addition, the present invention provides a technique for HAs of different domains to discover each other, and provides a technique for triggering route optimization either from the network or from the ME. The different domains may be, for example, police, fire dept., etc.

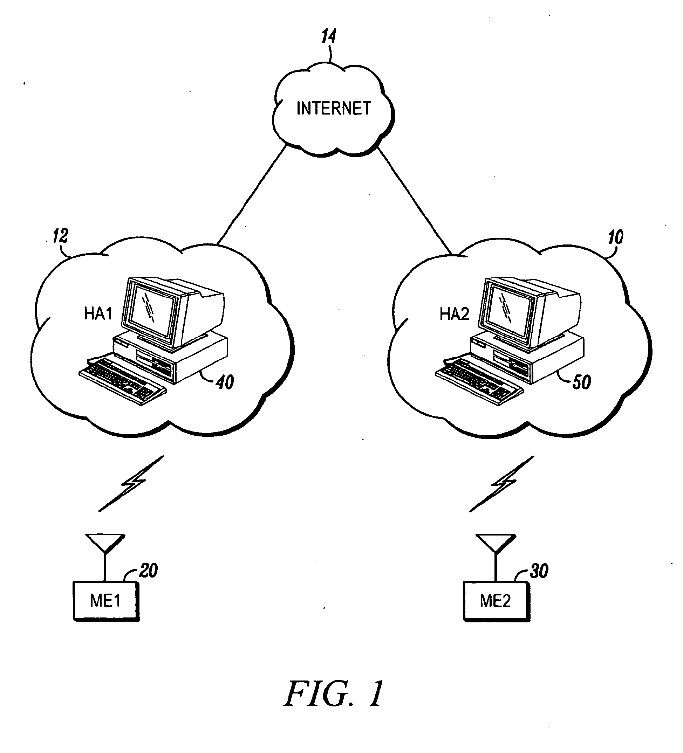

FIG. 1 illustrates a simple block diagram of an exemplary mobile IP enabled system that may be used to implement an embodiment of the present invention. Illustrated therein is a network 12 for a mobile entity (ME1) 20 and a network 10 for a mobile entity (ME2) 30 linked by the Internet 14. A mobile entity can be a standalone mobile node or mobile router. Both mobile entities 20 and 30 have an associated home address with their respective networks 12, 10 such that when a mobile entity 20, 30 is attached to the network in its home network, data packets can readily reach mobile entity 30 using standard IP routing. IP data packets are addressed to the ME's home address (or to a destination address which matches the ME's mobile subnet in the case where the ME is a mobile router). It should be understood by those of ordinary skill in the art that mobile entities 20 and 30 may share a common home network or have different home networks that may be in the same domain or in different domains. It should also be noted that the network can communicate directly without an Internet connection.

Included in the network 12 is a mobility server or home agent (HA1) 40 for mobile entity (ME1) 20, and included in the network 10 is a home agent (HA2) 50 for mobile entity (ME2) 30. Mobile entity ME1 20 must register a care-of address with HA1 40 when its point of attachment is in a foreign network (i.e., a network other than network 12) so that HA1 40 may tunnel data destined to mobile entity ME1 20 to that care-of address. Likewise, mobile entity ME2 30 must register a care-of address with HA2 50 when its point of attachment is in a foreign network (i.e., a network other than network 10) so that HA2 50 may tunnel data destined to mobile entity ME2 30 to that care-of address. It should be recognized that HA1 and HA2 may also be the same home agent.

FIG. 1 is only representative of a mobility management system, and therefore, shows only a limited number of mobile entities and home agents for purposes of ease of illustration. However, it should be understood by those of ordinary skill in the art that typically many more mobile entities are attached to the system, along with stationary nodes. In addition, there are many more local networks or subnetworks, domains, and mobility servers included in the system. It should be further understood by those of ordinary skill in the art that the functionality of the home agents may be implemented in software or hardware, although the functionality is typically implemented in software.

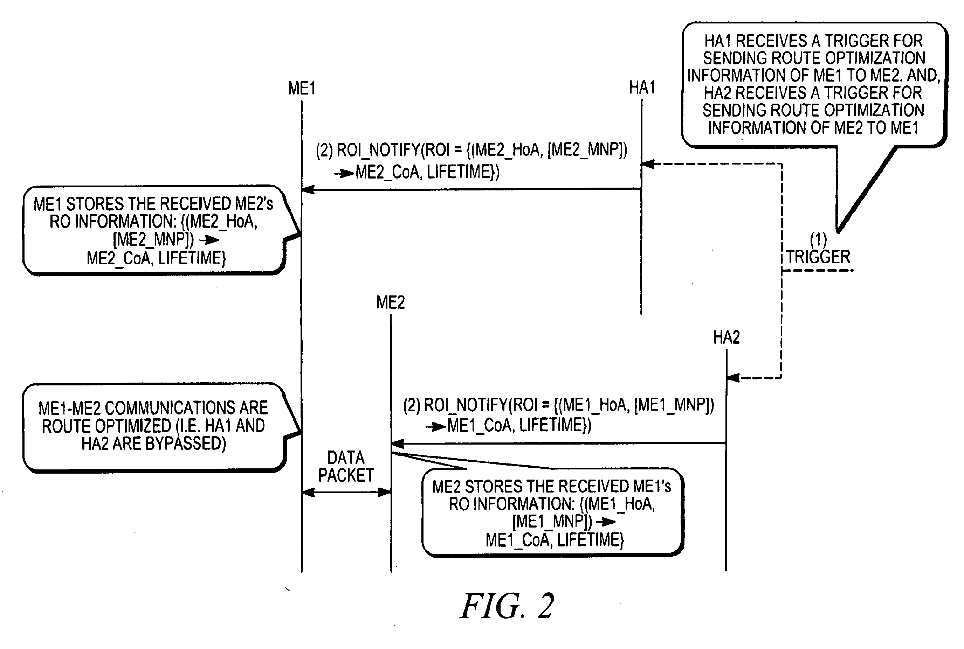

FIG. 2 illustrates a flow diagram of the signaling operation of a home agent, e.g. HA1 40 or HA2 50, implementing local routing in accordance with an embodiment of the present invention. In this embodiment, the home agent implements the invention in accordance with mobile IP. However, those of ordinary skill in the art will realize that the present invention may just as easily be implemented using a home agent providing IP subnet mobility to mobile entities utilizing a different, possibly proprietary, client-server based mobility management mechanism.

A novel aspect of the present invention consists in leveraging an existing security association and security protocol, such as Mobile-IP, IPsec etc., between a mobile entity (ME) and its home agent (HA) for securely delivering route optimization information from the ME's HA to the ME; the said route optimization information referring to other mobile entities (e.g. home address/care-of address binding of another mobile entity). Upon determining an optimized route from (or between) a mobile entity by its serving home agent, the serving home agent delivers the route optimization information to the served mobile entity using an existing Mobile IP security protocol, whereupon the served mobile entity is configured using the route optimization information to enable routing of data packets from the first mobile entity to the second mobile entity bypassing the serving home agent.

Similarly, a second home agent (or the same home agent) serving a second mobile entity can determine an optimized route between the mobile entities, deliver the route optimization information from the second home agent to the second mobile entity using an existing Mobile IP security protocol, whereupon the second mobile entity is configured using the route optimization information to enable routing of data packets between the first and second mobile entities bypassing the home agents.

In the embodiment of FIG. 2, HA1 and HA2 are two home agents of the same or different networks, and ME1 and ME2 two mobile entities (either standalone mobile nodes running MIPv4/6, or mobile routers running NEMOv4/6) registered to HA1 and HA2, respectively. HA1 has a binding cache entry for ME1 mapping ME1's home address (ME1_HoA) to its care-of address (ME1_CoA), and eventually the ME1's mobile network prefix (ME1_MNP) to its care-of address in the case where ME1 is a mobile router. Similarly HA2 has a binding cache entry for ME2.

When the network (e.g. a "Route Optimization Control Function" in the corporate network), decides (e.g. based on route optimization policies) that route optimization should be established between the two mobile entities ME1 and ME2, the network triggers the sending of Route Optimization Information Notification messages (ROI_NOTIFY) from HA1 and HA2 to ME1 and ME2 respectively. The ROI_NOTIFY message sent from HA1 to ME1 includes the necessary information for ME 1 to send data packets to ME2 along an optimized routing path. This information includes ME2_HoA (and also ME2_MNP if ME2 is a mobile router), ME2_CoA, and a lifetime (i.e. the amount of time the route optimization information is considered valid).

Similarly, the ROI_NOTIFY message sent from HA2 to ME2 includes ME1_HoA (eventually ME1_MNP), ME1_CoA, and a lifetime. A ROI_NOTIFY message can potentially include route optimization information for different target nodes. Also, it can be implemented as a new message, or an extension of an existing MIPv4/6 (or NEMOv4/6) message (e.g. MIPv6 Binding ACKnowledge, MIPv4 Registration Reply, etc.).

The ROI_NOTIFY message sent from HA1 to ME1 may be secured by leveraging the existing security association between ME1 and HA1.This security association may be a Mobile IP security association or an IPsec security association. Similarly The ROI_NOTIFY message sent from HA2 to ME2 may be secured by leveraging the existing security association between ME2 and HA2.

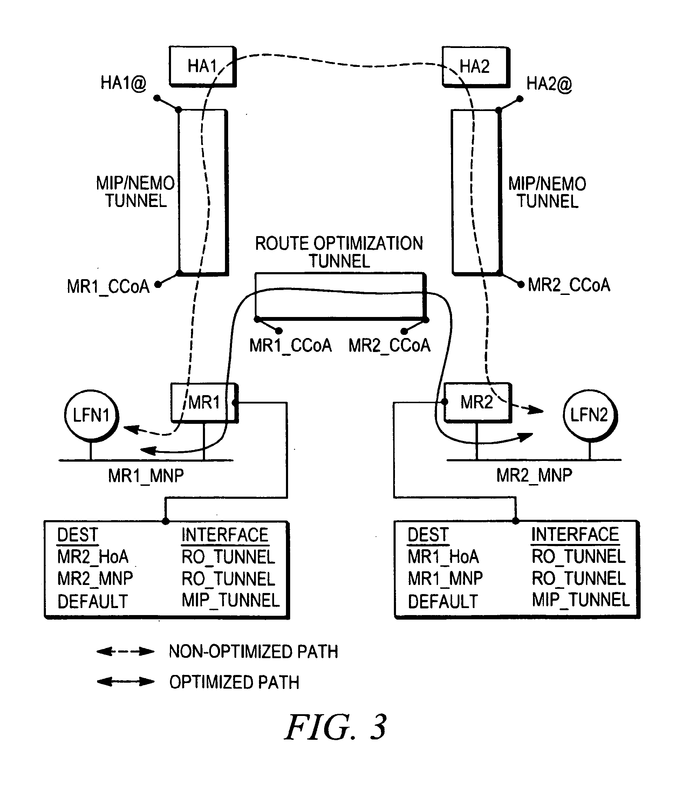

Using the information contained in the ROI_NOTIFY message, each of ME 1 and ME2 will configure its IP stack to route packets to the other along an optimized path. For instance, in a first embodiment, ME1 will configure a tunnel interface towards ME2_CoA, and route any IP packet which destination address matches ME2_HoA or ME2_MNP through the said tunnel; (and thus bypassing the ME1's MIP tunnel to its home agent HA1). ME2 will perform similar operations for ME1. This configuration is typically applied when both ME1 and ME2 have a co-located care-of address (CCoA); where a CCoA can be defined as an externally obtained local address which the mobile entity has associated with one of its own network interfaces. This is illustrated in FIG. 3 for the case of two mobile routers MR1 and MR2.

In an alternative embodiment, where the two mobile entities are MIPv6 mobile nodes (MN1 and MN2), the mobile entities can use the MIPv6 home address options and type-2 routing header (as per MIPv6 specification) instead of a tunnel to route data packets between them along the optimized path.

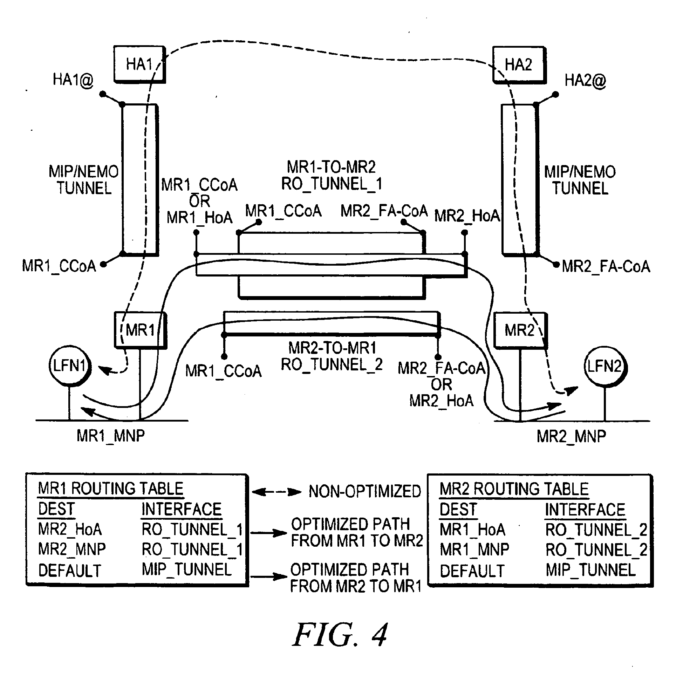

In another alternative embodiment of FIG. 4, a route optimized data packet from a mobile entity ME 1 to a second mobile entity ME2 will be encapsulated twice; first in a tunnel bound to the home address of the second mobile entity ME2, and then inside a tunnel bound to the care-of address of ME2. This is typically the case when ME2 (the destination mobile entity) is a NEMOv4 mobile router using a non-NEMOv4-capable Foreign Agent (i.e. MIPv4 FA); where a Foreign Agent can be defined as a router on a mobile entity's visited network which provides routing services to the mobile entity while registered. For MR1 to discover that MR2 is under a non-NEMOv4-capable FA (and thus use the double encapsulation scheme) MR1's HA can include this information in the ROI_NOTIFY message. In the reverse direction (i.e. MR2 to MR1) a single tunnel bound to the co-located care-of address of MR1 is sufficient to route packets from a Mobile Network Node (MNN) under MR2 (e.g. from LFN2) to a Mobile Network Node under MR1 (e.g. to LFN1) along an optimized path since MR1 is using a co-located care-of address. A MNN can be defined as any node (host or router) located within a mobile network, either permanently or temporarily. A MNN may either be a local fixed node (LFN) or a mobile node. A LFN is a node without IP mobility capabilities deployed in a mobile network (i.e. behind a mobile router). Note that MR2 (i.e. any MR under a Foreign Agent, be the Foreign Agent NEMOv4-capable or not) can either source the tunneled packet with its Foreign Agent based care-of address (MR2_FA-CoA) or with its home address (MR2_HoA). In the first case, MR2 will bypass its FA for routing upstream packets; while in the second case MR2 will send the packet to its FA using a Direct Delivery Style, so that the FA does not reverse tunnel the packet to MR2's HA but instead just applies regular forwarding on the packet. This assumes MR2 has registered with the FA using the "Encapsulating Delivery Style Extension" so that it is capable of selecting (Selective Reverse Tunneling) when a packet should be reverse tunneled by the FA (i.e. if Encapsulated Delivery Style is used) and when it should just be forwarded without reverse tunneling (i.e. if Direct Delivery Style is used). Of course, if the two mobile routers MR1 and MR2 are attached to non-NEMOv4-capable FAs, the double encapsulation approach would be used in both directions. Again, the destination address of the inner tunnel will be bound to the home address of the destination mobile router (e.g. MR1_HoA) and the destination address of the outer tunnel will be bound to the FA based care-of address of the destination mobile router (e.g. MR1_FA-CoA). Again, the source addresses of both inner and outer tunnels can be set to either the home address or FA-based care-of address of the source mobile router (e.g. MR2_HoA or MR2_FA-CoA).

In another embodiment where the destination mobile entity ME2 is a mobile node (i.e. not a mobile router) attached to a Foreign Agent; only one tunnel bound to the FA-based care-of address (ME2_FA-CoA) is needed for sending packets to ME2 (i.e. ME2_HoA) along an optimized path. If the source mobile entity (MN or MR) is using a co-located care-of address then this address should be used as the source address of the route optimization tunnel. On the other hand, if the source mobile entity (MN or MR) is using a FA-based care-of address, then it can use either this address or its home address as the source address of the route optimization tunnel.

A Home Agent (e.g. HA1) can obtain Route Optimization Information concerning a target Mobile Entity (e.g. ME2) in various ways such as:
- Using specific signaling to request this information to the home agent of the target mobile node (e.g. HA2); which can retrieve the information from its binding cache.
- Retrieve the information from a central database (or a server managing a central database), where such a database could be regularly updated with the bindings known by each home agent in the network.
- From the home agent's own binding cache, e.g. in case the target node is served by the said home agent or if a prior route optimization involving the target node was handled by the said home agent.

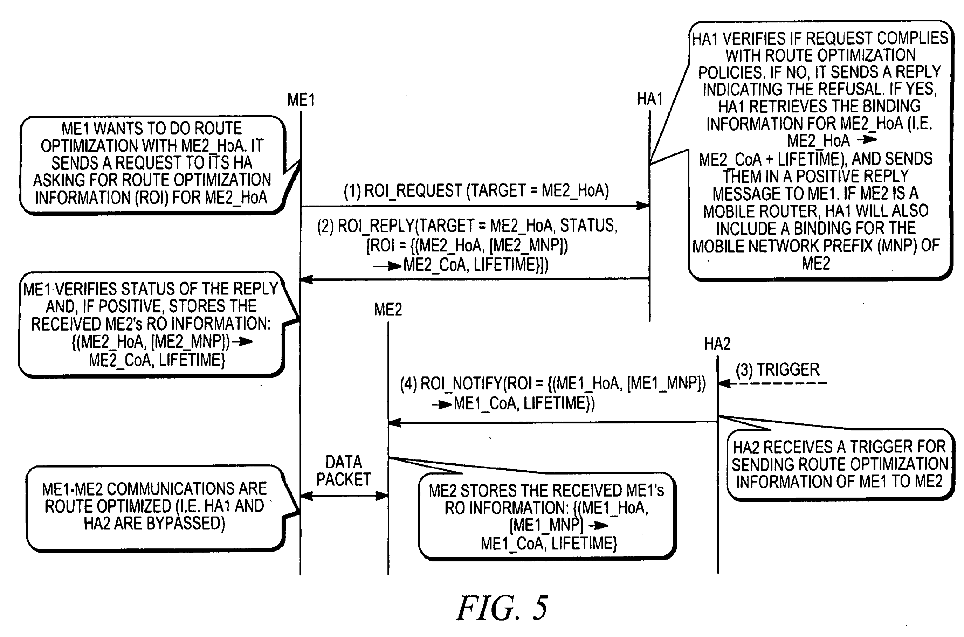

In another embodiment of the present invention of FIG. 5, the mobile entity (e.g. ME1) can request its home agent (e.g. HA1) for route optimization information relating to a target node (e.g. ME2) with which the mobile node intends to communicate (or is communicating). This relies on the Route Optimization Information Request (ROI_REQUEST) and Route Optimization Information Reply (ROI_REPLY) messages.

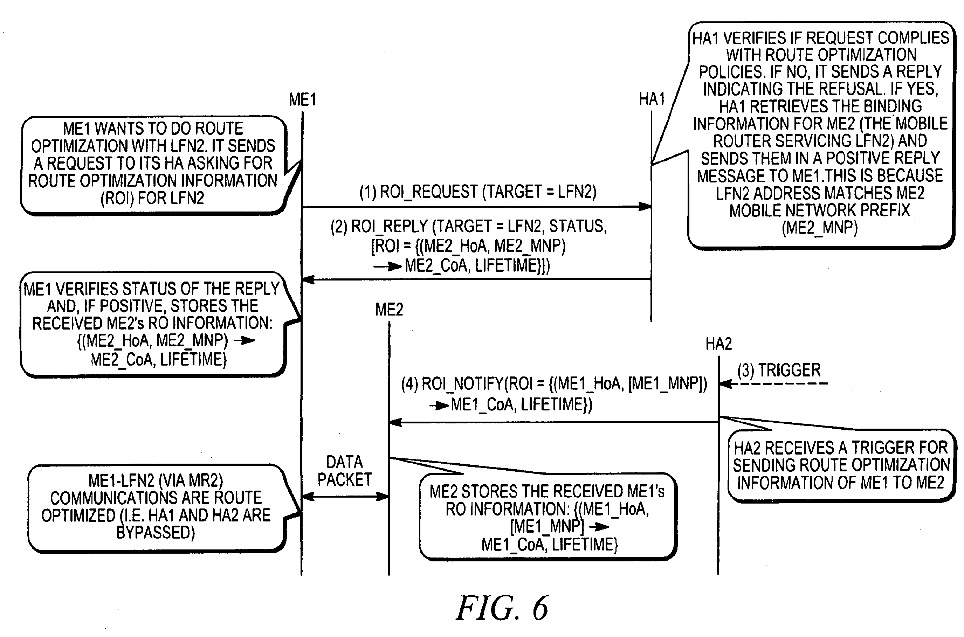

The ROI_REQUEST message includes (at least) the IP address of the target node for which route optimization information are requested. This is typically the home address of a mobile entity (see FIG. 5), or the IP address of a fixed node behind a mobile router (see FIG. 6). Upon receiving the ROI_REQUEST message from its mobile entity (e.g. ME1), the home agent (e.g. HA1) verifies whether the request complies with its route optimization policies, that is if HA1 is authorized to disclose route optimization information of the target node (e.g. ME2) to the requestor (e.g. ME1). If the policy forbids the sending of the Route Optimization information (ROI) to the requestor, the home agent (e.g. HA1) will notify the refusal to the requestor by sending a ROI_REPLY message with an appropriate error code (e.g. in the "status" field). If the policy authorizes the sending of the route optimization information of the target node (e.g. ME2) to the requestor (e.g. ME1) then the home agent (e.g. HA1) will first retrieve the said route optimization information and then send them to the requestor in a ROI_REPLY message. Again, the route optimization information consists of ME2_HoA (and also ME2_MNP if ME2 is a mobile router), ME2_CoA, and a lifetime (i.e. amount of time the route optimization information is considered valid).

As for the ROI_NOTIFY message, The ROI_REQUEST and ROI_REPLY messages exchanged between a mobile entity (e.g. ME1) and its home agent (e.g. HA1) can be secured using a Mobile IP / NEMO security protocol. In particular, these messages can be secured by leveraging the existing security association between the mobile entity (e.g. ME1) and its home agent (e.g. HA1). For instance, this security association can be a Mobile IP security associated (e.g. as per RFC 3344, or RFC 4285) or an IPsec security association (e.g. as per 3776).

Note that if the target node is a node behind a mobile router (e.g. LFN2 behind MR2, as in FIG. 4 for instance), the route optimization information returned to the requestor in the ROI_REPLY message are those of the mobile router (e.g. MR2) servicing the target node. This is illustrated in FIG. 6.

Finally, note also that if the target node is a node for which no route optimization information are available (for instance because the target node is a fixed node) then a ROI_REPLY message with an appropriate error code is sent to the requestor.

Of course, the ROI_REQUEST can potentially include IP addresses of multiple target nodes; and the ROI_REPLY include route optimization information for different target nodes. Both messages can be implemented as a new message, or as an extension of an existing MIPv4/6 (or NEMOv4/6) message.

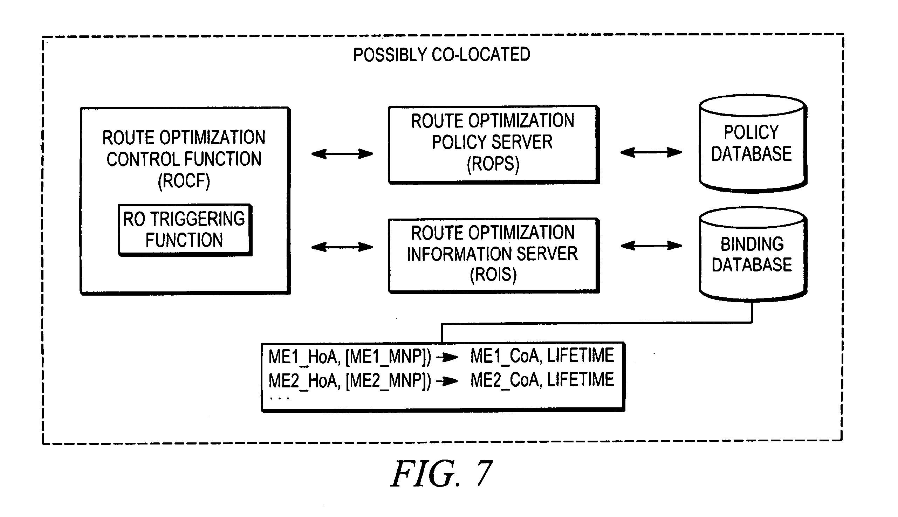

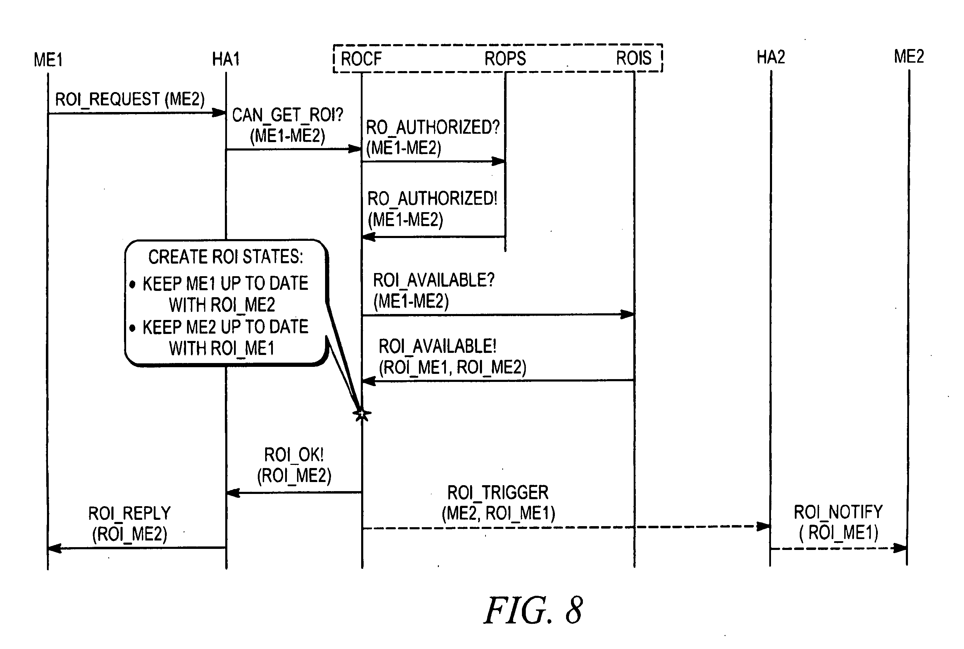

Optionally (and preferably), the delivery of route optimization information relating to a second node (e.g. ME2) to a first node (e.g. ME1) should also trigger the delivery of route optimization information relating to the first node (e.g. ME1) to the second node (e.g. ME2). This will provide bi-directional route optimization between the two nodes. The trigger (see step 3 in FIG. 5/FIG. 6) could be implemented in a number of ways, for instance as a message sent by the home agent of the first node (e.g. HA1) or by a Route Optimization Control Function (ROCF) in the network, as illustrated in FIGs. 7 and 8.

In the embodiment where the ROCF is used, a specific interface exists between Home Agents and the ROCF. Firstly, this interface allows any HA to obtain Route Optimization Information for a specific target node, e.g. upon reception of a ROI_REQUEST message. The ROCF (possibly with the help of the Route Optimization Policy Server ROPS and Route Optimization Information Server ROIS) will verify whether route optimization is authorized between the requestor ME and the target ME, and if authorized retrieve the associated route optimization information. Any type of route optimization policy can be implemented at the ROPS; for instance allowing Route Optimization (RO) only between mobile entities of the same agency or between mobile entities of collaborating agencies (e.g. police and firemen). The ROIS functional entity may be implemented as a centralized server (as shown) or in a distributed manner. For instance, each HA in the system may co-locate a ROIS that will manage a database made of only the bindings of the mobile entities of the said HA (i.e. from the HA's binding cache). In that case, the ROCF would contact HA2 to get ME2's binding/ROI and respectively would contact HA1 to get ME1's binding/ROI. Secondly, the interface allows the ROCF to trigger the sending of ROI_NOTIFY from a ME's HA to the ME.

Of course, any of the ROCF, ROPS, and ROIS can be co-located or not; and any of these functions (or all) can be collocated on a home agent.

There are also mobility considerations in route optimization. When route optimization is used between two mobile entities ME1 and ME2, and one of the two (e.g. ME 1) moves to a new visited network, a ROI_NOTIFY message containing route optimization information of ME1 should be sent from ME2's HA to ME2.

Again this can be implemented in different ways. In one embodiment, the ME2's HA receives a trigger message from ME1's HA including the updated ME1 route optimization information. In another embodiment, the ME2's HA receives a trigger message from a ROCF in the network for sending the new ROI_NOTIFY with the updated ME1 route optimization information. In both cases, the trigger message received by ME2's HA may contain ME2's identity (e.g. ME2 home address), in addition to the ME1 route optimization information, for indicating to ME2's HA the identity of the mobile entity (here ME2) that needs to be updated with ME1's route optimization information via a ROI_NOTIFY. When the ROCF is used, it can be informed of any change in the binding database by the ROIS, the binding database being updated by a HA (e.g. ME1's HA) each time the later receives a new binding from one of its ME (e.g. ME1).

Note that when a ROCF is present in the network, the first way of sending the ROI_NOTIFY message to ME2's HA (i.e. from ME1's HA) can be activated dynamically by the ROCF; in which case the ROCF delegates the sending of the ROI_NOTIFY messages to the ME1's HA.

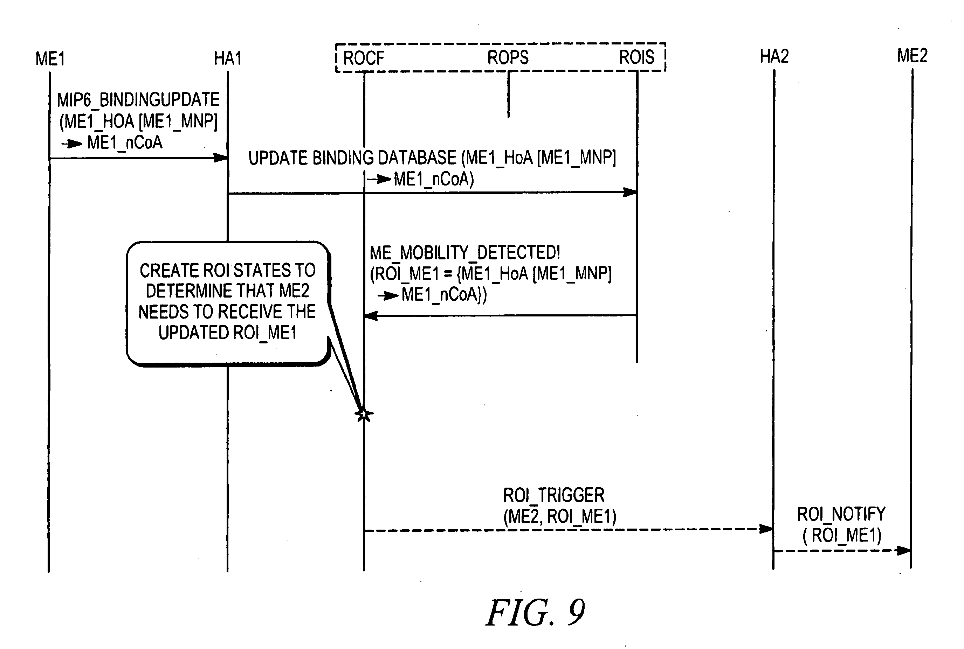

In both cases, the entity sending the trigger (ROCF or ME1's HA) maintains a list of corresponding mobile entities (e.g. ME2) which are using route optimization with ME1 in order to trigger the sending of a ROI_NOTIFY message with the updated information forwarded to all of them as ME 1 changes of care-of address. This list can be established at the time the route optimization is established (i.e. authorized) between the two nodes (see the create ROI states in FIG. 8). This is summarized in FIG. 9 for the case where the ROCF is used.

The present invention also has security and inter-agencies considerations. Since ROI_REQUEST, ROI_REPLY, and ROI_NOTIFY messages are exchanged between a mobile entity and its home agent, these messages can be authenticated by leveraging the existing Mobile-IP/NEMO mobility security association that exists between those entities (and that is used to secure Mobile-IP/NEMO signaling messages between them). As per Mobile IP specification (RFC 3344), a Mobility Security Association is a collection of security contexts, between a pair of nodes, which may be applied to Mobile IP protocol messages exchanged between them. Each context indicates an authentication algorithm and mode (e.g. HMAC-MD5), a secret (a shared key, or appropriate public/private key pair), and a style of replay protection in use (e.g. timestamps or "nonces").

For instance, in the case of Mobile IPv4 / NEMOv4, the ROI_NOTIFY and ROI_REPLY messages can be authenticated in the same way as a Registration Reply message from the HA to the MN, using the existing mobility security association. Similarly, the ROI_REQUEST message can be authenticated in the same way as a Registration Request message, using the existing mobile security association. The same approach can also be used with Mobile IPv6 /NEMOv6 irrespective of whether a mobility security association ala Mobile-IPv4 (RFC 4285) or instead an IPsec security association (default mode as per RFC 3775) is used to secure the Mobile IPv6 / NEMOv6 messages.

Assuming the Mobile Entity trusts information (e.g. route optimization information of a target node) sent by its Home Agent, it is sufficient for the ME to authenticate the messages as being sent by its HA for considering the received information as valid.

In addition, it can be assumed that HA1-HA2 link is secured in the case of HA1-HA2 direct communications, or HA1 and HA2 have trust relationship with the ROCF (and other logical nodes mentioned previously) in the case of HA1-HA2 indirect communication via ROCF. Both these trust relationships can be established in a number of ways such as:
- Static Configuration, which consists in using a statically configured HA1-HA2 security association on HA1 and HA2, or a statically configured HA1-ROCF security association on HA1 and ROCF as well as a statically configured HA2-ROCF security association on HA2 and ROCF.
- Dynamic establishment, where the HA1-HA2, HA1-ROCF, and HA2-ROCF security associations can be dynamically established for instance by using a Public Key Infrastructure (PKI) or an Authentication Authorization and Accounting (AAA) infrastructure. The ROCF can also act as a trusted third party for dynamically establishing a security association between HA1 and HA2 (for the purpose of exchanging RO information) based on existing HA1-ROCF and HA2-ROCF security associations. Dynamic establishment of security associations between HAs or between HAs and ROCF is well suited for inter-agency scenarios; i.e. when secure and lightweight route optimization needs to be enabled between mobile entities from different agencies (e.g. police and firemen) that need to collaborate, such as at an incident scene.

An embodiment of the present invention for the inter-agency scenario is described below, based on dynamic security association establishment using a PKI. Consider two agencies A and B which need to provide route optimization between their mobile entities. Agency A owns the ROCF that needs to be used for route optimization management of mobile entities of both agencies. A PKI infrastructure is used to provide certificates to the ROCF and all HAs of agency A as well as to all HAs of agency B. Note that the certificates for agency A and B can potentially be issued by different Certificate Authorities (CA) as long as a trust relationship can be verified between the CAs (e.g. using known PKI interconnection techniques such as a Bridge CA or a Mesh of CAs).

Using their certificates and the IKE protocol, any HA of agency B can mutually authenticate with the ROCF of agency A and dynamically establish an IPsec security association between them for securing the exchange of route optimization information. This way the ROCF can control the agency an HA belongs to and determine whether it will or not provide the route optimization service for this HA.

In the specific situation where route optimization needs to be supported only between mobile entities of a same Home Agent, the use of a Route Optimization Information Server (ROIS, and its associated database) is not required and can be replaced by the HA's local binding cache. Similarly the Route Optimization Policy Server (ROPS, and its associated database) can be replaced with a local policy file available on the HA. The Route Optimization Control Function (ROCF), then preferably co-located on the HA, is thus simplified and only needs to interact with the route optimization local policy file, and the binding cache.

Considering Mobile VPN (Virtual Private Network), in some specific scenarios the mobile entities may use a VPN service (in addition to Mobile IP) to connect to a network, known as a Mobile VPN (MVPN) solution. A Mobile VPN solution is for instance achieved by combining the Mobile IP tunnel (between the mobile entity and the Home Agent in the corporate network) with a VPN tunnel (between the mobile entity and a VPN gateway in the corporate network). The VPN tunnel is bound to the home address (HoA) of the mobile entity, and maintained thanks to the Mobile IP tunnel as the mobile entity changes IP subnet. In other words, in this case, the VPN tunnel is nested inside the Mobile IP tunnel. The confidentiality provided by the VPN service allows the mobile entities to exchange data between them in a secure manner, via the MVPN tunnels of each of the mobile entities.

When route optimization is achieved between the two mobile entities, the data exchanged between them should still be provided the same level of security as when routed via the network (i.e. via HA + VPN gateway). To address this issue, in another embodiment of the invention, the route optimization tunnel used between the two mobile entities is secured (e.g. provides authentication and/or encryption). This can be implemented in various manners; for instance by using IPsec (and IKE) for securing the route optimized tunnel bound to the care-of addresses (see FIG. 3), or by using an extra point-to-point VPN tunnel bound to the home addresses of the two mobile entities, and nested inside the route optimization tunnel. The point-to-point VPN tunnel can be established using IPsec (and IKE).

The present invention envisions different methods of triggering route optimization. There are several methods of triggering RO, depending on the use case scenario and policy settings of the system. If the two MEs involved in the RO are both served by the same HA, then it is fairly easy to assume the HA can trigger the RO process based on the proximity (geographic or otherwise) of the MEs in question, based on each MEs CoA. The HA can for instance use a map of the network topology (including addressing information) for that purpose.

The following methods can be used for triggering Route Optimization between 2 MEs served by different HAs in the same domain or agency.

In a first method, a location tracking database or server can be used to trigger RO or inform an inquiring HA1 on the location of ME2 based on the known ME2's HoA (HA1 already knows ME1 by its HoA-CoA mapping). The ROCF function can be involved here as well to determine if RO should occur. For example, HA1 queries the location database after a certain threshold of time or amount of data sent for the location (e.g. care-of address) of what it knows to be the CN (ME2 in this case). The location database server replies with the location (e.g. care-of address) of ME2 (whose mobility is managed by HA2). HA1 provides the location server with the HoA of the ME2 as part of the query.

A second method for triggering route optimization between two MEs served by different HAs in the same domain or agency relies on direct interaction between the HAs (without the need for a location server). In this approach, all HAs in a domain can be configured with the mappings of HoA ranges to specific HAs, so HA1 can query HA2 directly for CoA of ME2, simply based on the knowledge of ME2's HoA. This avoids the needs for interacting with a location tracking database or server. As a worst case, if HAs have no location info at all, we can still trigger RO when HA1 detects that ME2 is on the same subnet as ME1 (i.e. ME1 and ME2 care-of addresses share the same network prefix). Otherwise geographic proximity can be considered by HA1 for triggering (i.e. by using either real geographic location information or other means such as a map of the network topology including IP addressing information).

If the two HAs are in different domains, similar approaches can be used for triggering RO between two MEs served by HAs in different domains/agencies.

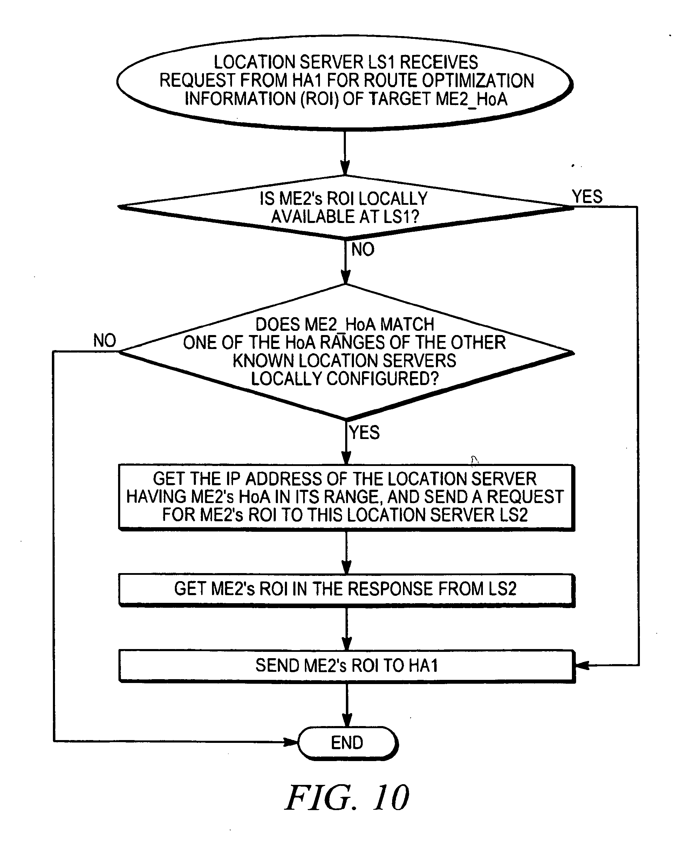

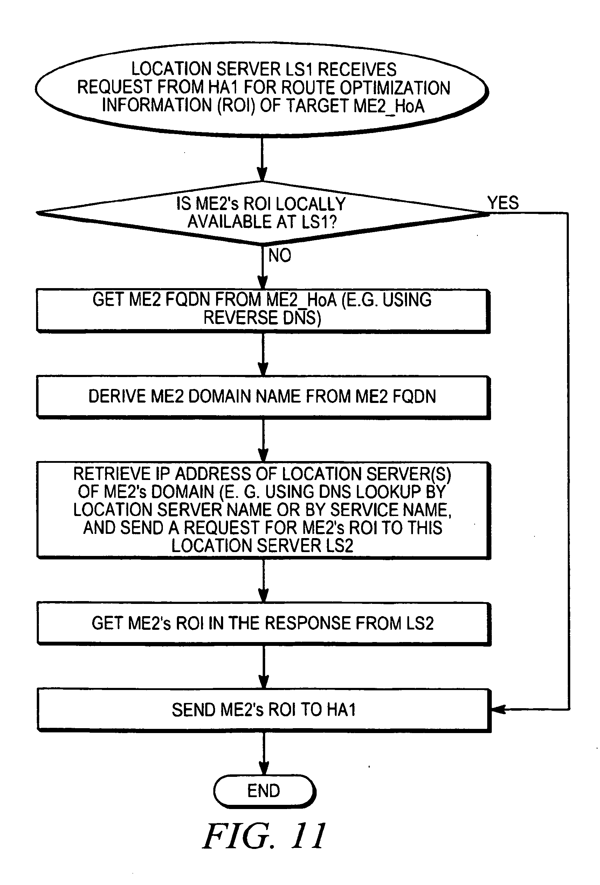

A first approach can rely on collaboration between location servers/ROCF (managing geographical or topological location information) of the two domains, for providing location information (e.g. care-of addresses) relating to nodes of a first domain to a second domain. The following solutions can be used to allow location servers of different domains to discover each others, and securely exchange information between them for the purpose of route optimization, such as:
a) Each location server can be pre-configured with the IP address of location servers of collaborating agencies together with the Home Address (HoA) ranges they serve. When this solution is used, FIG. 10 illustrates one embodiment of the operations of the location server of a first domain upon receiving a request from a HA of its domain for the route optimization information of a target mobile entity ME.
b) Preferably, the discovery can also be achieved dynamically by using DNS for instance. In particular, DNS lookup by Location Server name (e.g. "location_server.domain2.com"), or DNS lookup by service name (i.e. using "SRV" RR as per RFC 2782) can be used. When this solution is used, FIG. 11 illustrates one embodiment of the operations of the location server of a first domain upon receiving a request from a HA of its domain for the route optimization information of a target mobile entity ME.

Security Association between location servers of the different domains or agencies can be pre-configured, or preferably dynamically established for instance by having location servers mutually authenticating via the AAA infrastructure, or using a PKI.

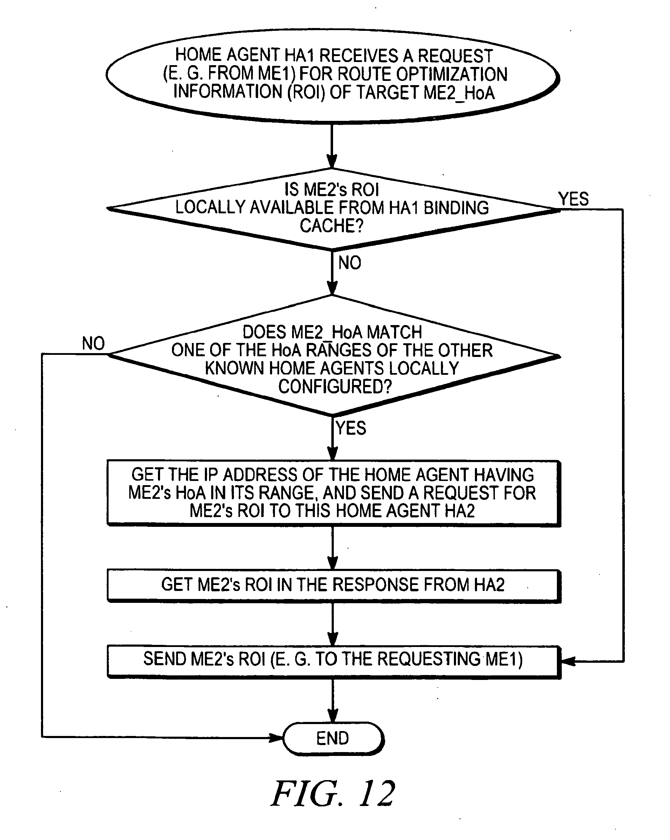

A second approach for triggering route optimization between MEs served by different HAs in different domains or agencies can rely on direct communications between HAs of the different domains. The following solutions can be used to allow HAs of different domains to discover each other, and securely exchange information between them, such
a) Each HA can be pre-configured with the mappings of HoA ranges to specific HAs at least within its own domain. When this solution is used, FIG. 12 illustrates one embodiment of the operations of the home agent of a first domain for retrieving the route optimization information of a target mobile entity ME in a second domain.
b) Preferably, the discovery of the IP address of an HA2 serving a target ME2 can be achieved dynamically for instance using DNS by: 1) Sending a Reverse DNS request to get ME2 Fully Qualified Domain Name (FQDN) or hastname(e.g. "me2.domain2.com") from ME2 home address (ME2_HoA), 2) Deriving the ME2 domain (e.g. "domain2.com") from ME2 FQDN, and 3) Sending a DNS request to get the IP address of the Home Agents (including HA2) serving the domain of ME2, either with DNS lookup by Home Agent name (e.g. "ha.domain2.com"), or DNS lookup by service name (SRV RR - i.e. a request with QNAME set to "_mip6._ipv6.domain2.com" and QTYPE to SRV).

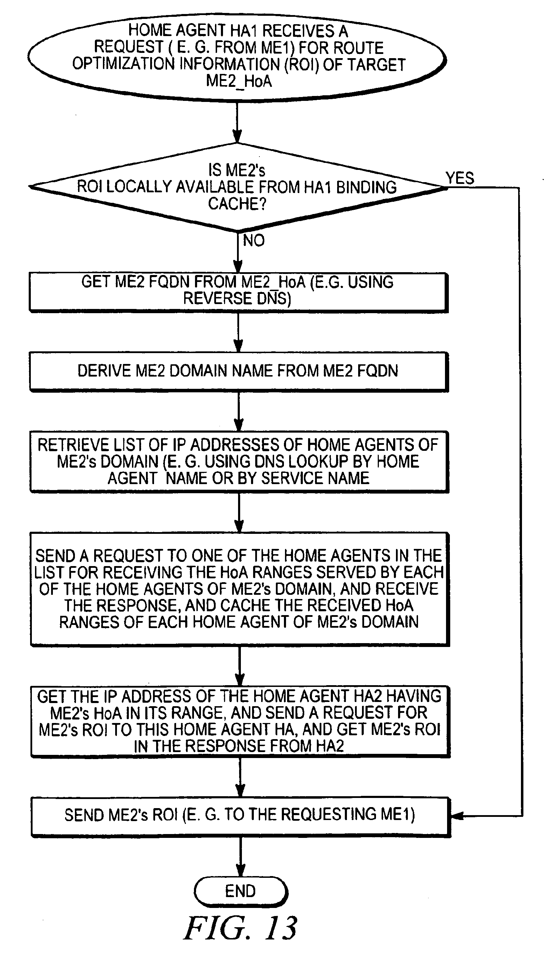

Both DNS lookup approaches can potentially return a list of home agent IP addresses, in case there are multiple home agents deployed in the domain of ME2. Retrieving, from the list, the particular HA2 serving ME2 can then be achieved in a number of ways such as; a) by contacting each HA of the list one after the other, until the one serving ME2 is reached, or b) by contacting only a single HA in the list (whatever it is), and receiving from this HA the list of HoA ranges served by each HA in the domain of ME2, and from this information retrieving the HA2 serving ME2, which is the preferred approach since it is efficient and simple to implement. (FIG. 13 illustrates one embodiment of the operations of the home agent of a first domain for retrieving the route optimization information of a target mobile entity ME), or c) by extending DNS (especially the DNS lookup by service name) for providing the range of HoAs served by each HA in the domain of ME2 in addition to their IP addresses.

Whatever the mechanism used for the discovery of HAs in another domain, each HA of a first domain should cache the received information and build/maintain a database of all HAs in other domains with their respective ranges of HoAs. This will speed up the HA discovery process for subsequent need of route optimization between ME in different domains.

Another solution to allow HAs of different domains to discover each other, and securely exchange information therebetween can includes a pre-configured Security Association between Home Agents, or preferably dynamically established for instance by having location servers mutually authenticating via the AAA infrastructure, or using a PKI.

In both intra and inter domain/agency scenarios, when a location server detects (geographical/topological) proximity between two MEs, it may first contact the respective HAs to determine whether communications is ongoing between the two MEs (or even a certain type of traffic) before triggering RO.

The present invention envisions that Route Optimization can be triggered by the network (e.g. by an HA or a Location Server / ROCF) or by a mobile entity. Network-triggered RO can be based on a) location proximity between the MEs, (e.g. by using MEs CoAs with a map of the network topology including IP addressing information, or by using geographical location information such as GPS); or b) based on characteristic of communication between MEs (e.g. triggering RO only after a time threshold, or after a given amount of data exchanged, or for certain type of applications such as audio/video streams/conferences, etc); or c) based on HA load (for offloading the HA, and thus enabling a form of load balancing).

With respect to ME-triggered route optimization, some level of situational awareness can be assumed by the MEs/applications when at incident scenes (e.g. the fact that a specific RAN is used). This can trigger the ROI handshake process by the MEs as described above. For example, certain applications may be tailored for incident scene usage, such as peer-to-peer video sharing. The launching of this application and communication to another node could trigger each ME to send a ROI request to its respective HA. This is true for both intra and inter-domain cases. Optionally (in the inter-domain cases), before sending the ROI request to its HA, the ME could query its correspondent ME (using specific ME-to-ME signaling, routed via the HAs) about the IP address of its Home Agent. This information could then be sent by the ME to its own HA to facilitate discovery of the correspondent ME HA.

Advantageously, the present invention leverages an existing (Mobile-IP) security association between a mobile entity (ME) and its home agent (HA) for securely delivering route optimization information from the ME's HA to the ME; the said route optimization information referring to other mobile entities (e.g. home address/care-of address binding of another mobile entity). The solution provided is unique because it meets all the requirements of a secure, lightweight, and manageable route optimization solution. It is secure in that it relies on the re-use of existing security association between a mobile node and its home agent. It is very simple to implement; and no extra keying materials are required (thus simple to manage). In addition, the security provided is stronger than with some other method known in the art such as the default Return Routability procedure (see RFC 3775). It is efficient in that a maximum of two messages (ROI_REQUEST and ROI_REPLY) is sufficient for providing (secure) route optimization information to a mobile entity, in the case of the process being initialized by the mobile entity, and only one message is needed (ROI_NOTIFY) in the case where the process is initiated by the network. It is also important to note that only one message is needed to update the route optimization information of a target node as the target node moves. This compares to the six messages of the prior art standard return routability procedure needed for the initialization as well as for each change of IP subnet. It is manageable in that the solution provides the network with the control of the route optimization process and allows for any type of "route optimization triggering" policies to be supported. Such manageability allows on one hand reducing the signaling/memory overhead associated with supporting route optimization for the every mobile nodes, and on the other hand supporting differentiation with respect to the "route optimization" service. In addition, the solution does not require any extension/modification to the visited network. Further, the solution is applicable both to mobile nodes and mobile routers; both in IPv4 or IPv6 environments. In addition, this scheme works for both Collocated Care of Address mode and Foreign Agent-CoA mode of operation for MIPv4. Further, it provides a means of Route Optimization between MEs using either of these modes. Moreover, the present invention also enables route-optimization for inter-agency communications.

The present invention has been described with respect to a mobility management system that utilizes mobile IP. However, it should be understood by those of ordinary skill in the art that the present invention may also be used in systems that use a different client-server based (and perhaps proprietary) mobility management mechanism. For instance, as long as there is a mobility server or router in the system that handles mobility management for clients, and as long as the clients inform the mobility server of their IP point of attachment, this invention can be applied.

Advantageously the present invention bases route optimization on the care-of address of the mobile node and hence provides a method of route optimization between two mobile nodes.

In practice, the present invention is implemented as follows:

### 1. Introduction

This document describes extensions to the Mobile IPv6 protocol [2] and Network Mobility (NEMO) Basic Support protocol [1] for enabling route optimization between two mobile entities. A mobile entity can be a mobile node or a mobile router. These extensions allow the home agent of a mobile entity to securely deliver to the mobile entity route optimization information referring to another mobile entity attached to the same or a different home agent.

Three new messages are specified which are the Route Optimization Information Request, Reply, and Notify messages. These messages are authenticated (and eventually encrypted) by leveraging the existing security association between a mobile entity and its home agent, thus enabling secure route optimization between two mobile entities.

### 2. Definition of Route Optimization Information

The Route Optimization Information (ROI) of a target mobile entity refers to the information that can be used by a source mobile entity to sent packets towards the target mobile entity along an optimized route, bypassing the home agent of the target mobile entity.

The ROI of a target mobile entity includes the following information:
- The home address of the target mobile entity
- The Mobile Network Prefix (MNP) of the target mobile entity, if it is a mobile router [optional]
- The care-of address of the target mobile entity
- A lifetime value, indicating the remaining lifetime for this ROI

Optionally, the ROI of a target mobile entity may also include a sequence number value, which is equal to the sequence number value stored in the binding cache entry of the target mobile entity at the target mobile entity's home agent (see Sections 9.1 and 10.1 of [2]).

### 3. Route Optimization Information Messages

### 3.1 Route Optimization Information Request Message

The Route Optimization Information (ROI) Request message is sent by a mobile entity to its home agent for requesting route optimization information of a target node. ROI Request messages are sent as described in section 4.

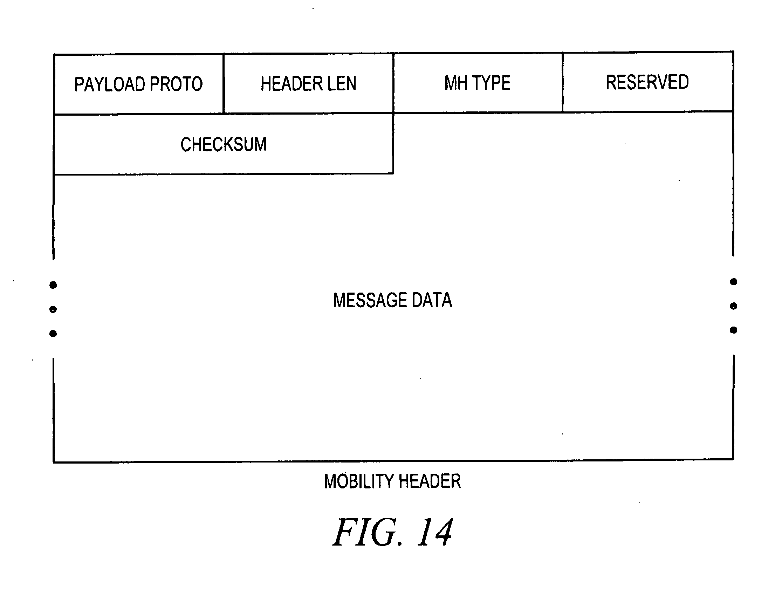

The ROI Request message follows the Mobility Header format specified in Section 6.1 of [2] and illustrated in FIG. 14.

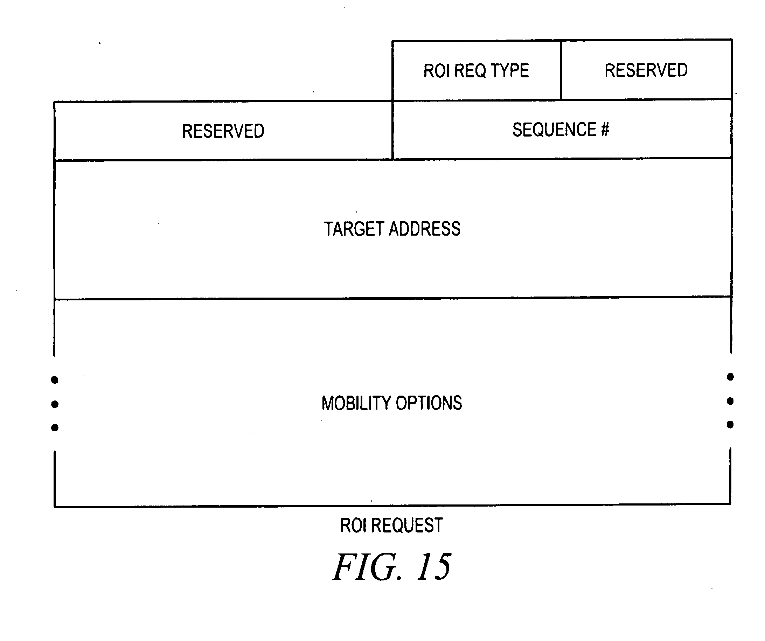

The ROI Request message uses the MH Type value (To Be Defined). When this value is indicated in the MH Type field, the format of the Message Data field in the Mobility Header is shown in FIG. 15.
- ROI Req Type: 8-bit unsigned integer indicating the type of ROI Request message. The following values are defined; new ones may be added in the future:
   o 0 : Simple Request without ROI Refreshment. This value of the ROI Req type is used for requesting a ROI Reply message in response containing the requested route optimization information, but without any update (through ROI Notify messages) when the route optimization information changes.
   o 1 : Request for activating ROI Refreshment. This value of the ROI Req type is used for requesting a ROI Reply message in response containing the requested route optimization information, together with updates (through ROI Notify messages) when the route optimization information changes.
   o 2: Request for terminating ROI Refreshment. This value of the ROI Req type is used for requesting termination of the notifications of the route optimization information changes for a target address.
- Sequence # : A 16-bit unsigned integer that may be used by the sending node to match a returned ROI Reply message with this ROI Request message.
- Target Address: The address of the target node for which route optimization information is requested by the node sending the ROI Request message.
- Mobility options: Variable-length field of such length that the complete Mobility Header is an integer multiple of 8 octets long. This field contains zero of more TLV-encoded mobility options. The encoding and format of defined options should follow the format specified in section 6.2 of [2]. The receiver should ignore and skip any options which it does not understand. The present document does not define any mobility options valid for the ROI Request message, but new ones may be defined in the future.

### 3.2 Route Optimization Information Reply Message

The Route Optimization Information (ROI) Reply message is sent by a home agent in response to a ROI Request message. ROI Reply messages are sent as described in section 4.

The ROI Reply message follows the Mobility Header format specified in Section 6.1 of [2].

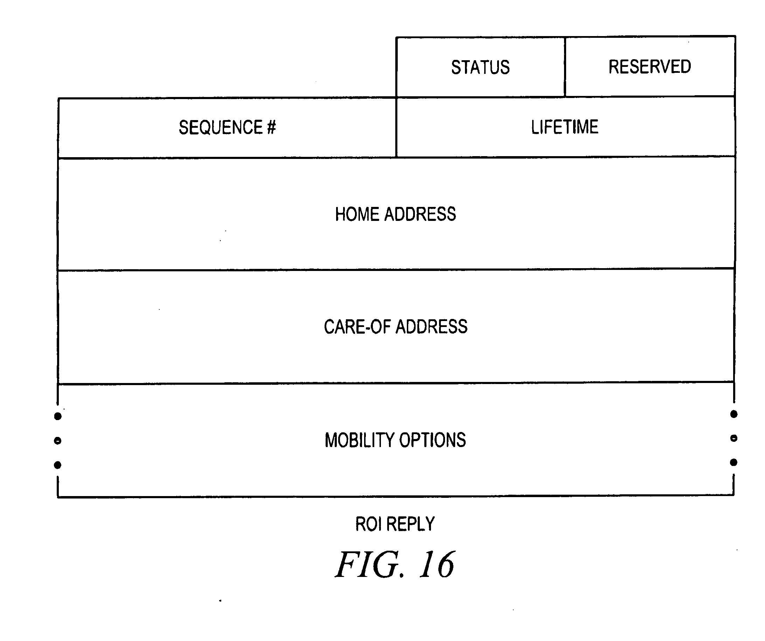

The ROI Reply message uses the MH Type value (To Be Defined). When this value is indicated in the MH Type field, the format of the Message Data field in the Mobility Header is as shown in FIG. 16.
- Reserved: These fields are unused for now but may be used for future extensions. They should be initialized to zero by the sender and should be ignored by the receiver.
- Status: 8-bit unsigned integer indicating the disposition of the ROI Request. Values of the Status field less than 128 indicate that the ROI Request was accepted by the receiving node. Values greater than or equal to 128 indicate that the ROI Request was rejected by the receiving node. The following Status values are defined; new ones may be defined in the future:
   o 0: ROI Request accepted
   o 1: ROI Request for terminating ROI Refreshment accepted
   o 128: Reason unspecified
   o 129: Administratively prohibited
   o 130: No route optimization information available for the target address
   o 131: Sequence number out of window
- Sequence #: The Sequence Number in the ROI Reply is copied from the Sequence Number field in the ROI Request. It is can be used by the receiving mobile entity in matching this ROI Reply with an outstanding ROI Request.
- Lifetime: The lifetime, in time units of 4 seconds, for which the receiving node should retain the Route Optimization Information contained in the message for the purpose of route optimization; it indicates the remaining lifetime for the route optimization information contained in the ROI Reply. The value of this field is undefined if the Status field indicates that the ROI Request was rejected.
- Home Address: The home address of a target mobile entity associated with the Target Address indicated in the ROI Request message. In particular, if the Target Address in the ROI Request message is the home address of a mobile node, then the Home Address field in the ROI Reply should contains the home address of that mobile node. If the target address in the ROI Request message matches the Mobile Network Prefix (MNP) of a mobile router, then the Home Address field in the ROI Reply message should contain the home address of the mobile router, and the MNP of that mobile router should be placed in a Mobile Network Prefix mobility option in the ROI Reply message. The value of this Home Address field is undefined if the Status field indicates that the ROI Request was rejected.
- Care-of Address: The care-of address of the mobile entity whose home address is included in the Home Address field of the ROI Reply. The value of this Care-of Address field is undefined if the Status field indicates that the ROI Request was rejected.
- Mobility options: Variable-length field of such length that the complete Mobility Header is an integer multiple of 8 octets long. This field contains zero of more TLV-encoded mobility options. The encoding and format of defined options should follow the format specified in section 6.2 of [2]. The receiver should ignore and skip any options which it does not understand.

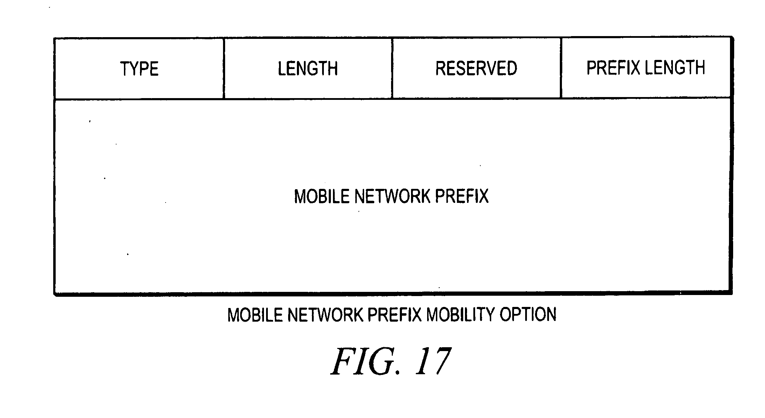

The Mobile Network Prefix mobility option defined in Section 4.1 of [1] is valid for the ROI Reply message and is illustrated in FIG. 17. There may be multiple Mobile Network Prefix mobility options in a ROI Reply if the target mobile entity whose home address is indicated in the Home Address field is a mobile router which has more than one mobile network prefix.

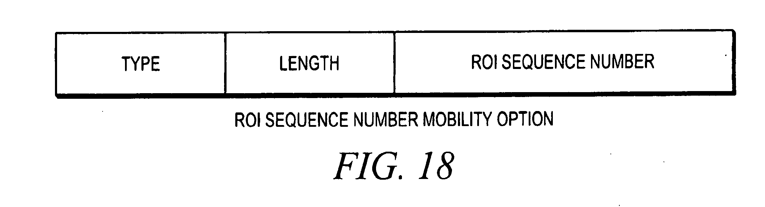

The ROI Sequence Number mobility option defined below is also valid for the ROI Reply message and is illustrated in FIG. 18.
- Type: 8-bit unsigned integer identifying a ROI Sequence Number mobility option. This value is To Be Defined.
- Length: 8-bit unsigned integer indicating the length in octets of the option, excluding the type and length fields. Set to 2.
- ROI Sequence Number: A 16-bit unsigned integer equal to the sequence number value stored in the binding cache entry of the target mobile entity at the target mobile entity's home agent (see Sections 9.1 and 10.1 of [2]); where the target mobile entity's home address is indicated in the Home Address field of the ROI Reply message. This information can be used by the node receiving the ROI Reply to sequence route optimization information of a target mobile entity received in different messages (ROI Reply or ROI Notify), and this way ensure that the freshest ROI is always used.

Other mobility options valid for the ROI Reply may be defined in the future.

### 3.3 Route Optimization Information Notify Message

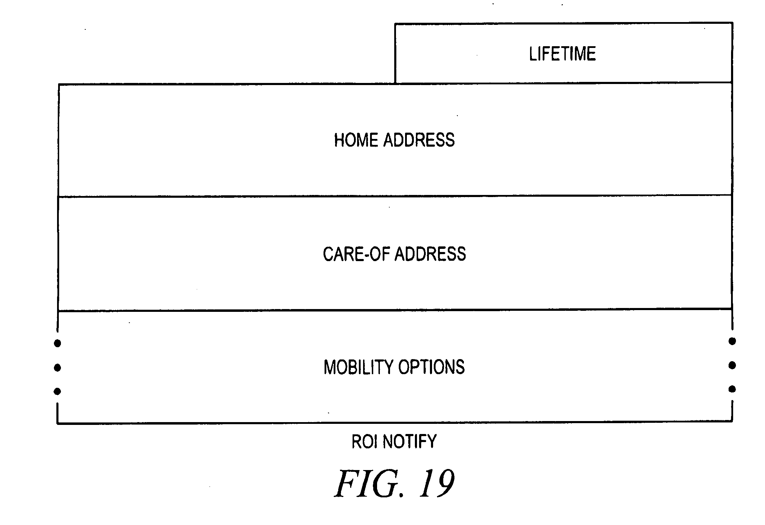

The Route Optimization Information (ROI) Notify message is sent to a mobile entity by its home agent for notifying the mobile entity about Route Optimization Information of a target mobile entity. ROI Notify messages are sent as described in section 4 and as shown in FIG. 19.
- Lifetime: The lifetime, in time units of 4 seconds, for which the receiving node should retain the Route Optimization Information contained in the message for the purpose of route optimization; it indicates the remaining lifetime for the route optimization information contained in the ROI Notify.
- Home Address: The home address of a target mobile entity.
- Care-of Address: The care-of address of the mobile entity whose home address is included in the Home Address field of the ROI Notify.
- Mobility options: Variable-length field of such length that the complete Mobility Header is an integer multiple of 8 octets long. This field contains zero of more TLV-encoded mobility options. The encoding and format of defined options should follow the format specified in section 6.2 of [2]. The receiver should ignore and skip any options which it does not understand.

The Mobile Network Prefix mobility option defined in Section 4.1 of [1] is valid for the ROI Notify message. There may be multiple Mobile Network Prefix mobility options in a ROI Notify if the target mobile entity whose home address is indicated in the Home Address field is a mobile router which has more than one mobile network prefix.

The ROI Sequence Number mobility option defined in this document is also valid for the ROI Notify message. Other mobility options valid for this message may be defined in the future.

### 4. Operations

### 4.1 Sending ROI Request

A mobile entity sends ROI Request messages to its home agent for requesting route optimization information of a target node.

If the mobile entity expects a one-time ROI Reply containing the requested route optimization information but no update when this route optimization information changes it should set the ROI Req Type in the ROI Request message to value 0 (Simple Request without ROI Refreshment).

If the mobile entity expects a ROI Reply containing the requested route optimization information, together with receiving updates (through ROI Notify messages) when the route optimization information changes, it should set the ROI Req Type in the ROI Request message to value 1 (Request for activating ROI Refreshment).

If the mobile entity requests termination of the update of the route optimization information changes it should set the ROI Req Type in the ROI Request message to value 2 (Request for terminating ROI Refreshment).

### 4.2 Receiving ROI Request & Sending ROI Reply / ROI Notify

### 4.2.1 Receiving ROI Request with ROI Req Type set to 0 or 1

A home agent receiving a ROI Request message with ROI Req Type set to 0 or 1 may determine if the node sending the request is authorized for receiving route optimization information of the target node address indicated in the ROI Request message. The authorization process may include the step of authenticating (and identifying) the source of the message and consult a set of route optimization policy rules.

If the sending node is not authorized, the home agent may reply with a ROI Reply message with Status field set to 129 (Administratively prohibited).

If the sending node is authorized for receiving the requested route optimization information, the home agent may retrieve the route optimization information of the Target Address indicated in the received ROI Request message. The home agent may use different means for this purpose such as:
- Consulting its Mobile IPv6 or/and NEMO binding cache
- Contacting a third party entity, such as a server regularly updated with the Mobile IPv6 and/or NEMO bindings known by other home agents in the network.
- Contacting other home agents in the network

If no route optimization information is available for the requested Target Address, the home agent may reply with a ROI Reply message with Status field set to 130 (No route optimization information available for the target address). This can happen for instance when the target address is the one of a fixed node in the network, or when it is the one of a mobile node whose route optimization information cannot be retrieved by the home agent receiving the ROI Request message.

If the route optimization information for the requested Target Address is available, the home agent may reply with a ROI Reply message with the Status field set to 0 (ROI Request accepted) and which include the route optimization information placed in the corresponding Home Address, Care-of Address, and Lifetime field.

The ROI Reply may also include one or more Mobile Network Prefix mobility options if the home address indicated in the Home Address field of the ROI Reply is the one of a mobile router. This can happen for instance in situations where the Target Address in the ROI Request matches the home address or the Mobile Network Prefix of a mobile router.

The ROI Reply may also include a ROI Sequence Number mobility option containing the sequence number value stored in the binding cache entry of the target mobile entity at the target mobile entity's home agent (see Sections 9.1 and 10.1 of [2]); where the target mobile entity's home address is indicated in the Home Address field of the ROI Reply message. This information may be used by the node receiving the ROI Reply to sequence route optimization information of a target mobile entity received in different messages (ROI Reply or ROI Notify), and this way ensure that the freshest ROI is always used.

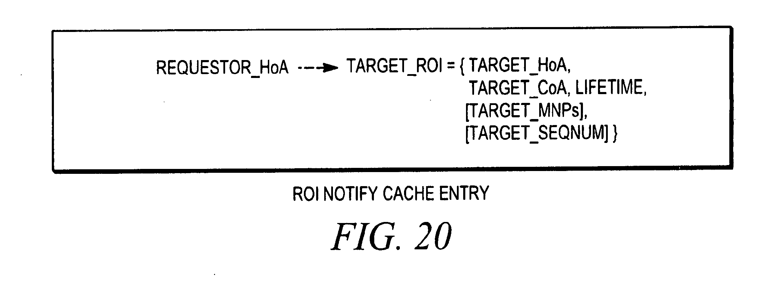

If the ROI Req Type in the received ROI Request message is set to 1 and route optimization information for the requested Target Address is available, the home agent may, in addition to sending the ROI Reply message, perform the following actions:
- Create an entry in a Route Optimization Information Notify Cache (ROI Notify Cache) mapping the home address of the mobile entity sending the ROI Request message to the route optimization information (i.e. target mobile entity's home address, care-of address, lifetime, and eventually mobile network prefixe(s) and sequence number) sent in the ROI Reply message. An entry of the ROI Notify cache is show in FIG. 20.
- Detect any change in the route optimization information of the created entry and update the Route Optimization Information Notify Cache accordingly.
- If the change is one of 1) the care-of address has changed, 2) the lifetime has been increased, 3) the lifetime has been explicitly set to 0 (forcing the removal of the route optimization information), or 4) the sequence number has increased, then the home agent may send a ROI Notify message to the mobility entity associated with the said route optimization information in the ROI Notify Cache (i.e. the mobile entity who had sent a ROI Request with ROI Req Type set to 1). The ROI Notify message will include the updated route optimization information.

Optionally, If the ROI Req Type in the received ROI Request message is set to 1 and route optimization information for the requested Target Address is available, the home agent may, in addition to the previous actions, also trigger sending of ROI Notify messages from the home agent of the target mobile entity to the target mobile entity, where the ROI Notify message would include the route optimization information of the initiator mobile entity, i.e. the mobile entity who has send the ROI Request message to its own home agent.

### 4.2.2 Receiving ROI Request with ROI Req Type set to 2

A home agent receiving a ROI Request message with ROI Req Type set to 2 may remove from its ROI Notify Cache any entry that maps the home address of the mobile entity sending the ROI Request message to route optimization information of a target mobile entity whose home address is indicated in the Target Address field of the ROI Request. The home agent will also stop sending ROI Notify message with the said route optimization information of the target mobile entity to the source of the ROI Request message.

The home agent may send a ROI Reply message with Status field set to 1 (ROI Request for terminating ROI Refreshment accepted) in response to the ROI Request with ROI Req Type set to 2, in order to acknowledge termination of the sending of the ROI Notify to the node for the corresponding target mobile entity. The value of the Sequence Number field in the ROI Reply is copied from the value of the Sequence Number in the ROI Request; the Home Address field in the ROI Reply is set to the home address of the target mobile entity (i.e. equal to the Target Address in the ROI Request). On the other hand, the lifetime, and care-of address field may be unspecified (e.g. set to 0), and Mobile Network Prefix option(s) and ROI Sequence Number option skipped.

The home agent may also terminate reception of the route optimization information of the target mobile node through any means it may have used, in case this information is note needed by any other mobile entity of the home agent.

### 4.3 Receiving ROI Reply & ROI Notify

A mobile entity receiving a ROI Reply message with Status set to 0, or a ROI Notify message, from its home agent may create (or update) an entry for the received route optimization information in its Route Optimization Information cache (ROI cache). This entry can then be used by the mobile entity for the purpose of optimization routing towards the target mobile entity corresponding to the received route optimization information.

A mobile entity receiving a ROI Reply message with Status set to 1, may first determine if a corresponding ROI Request (with the same sequence number and a ROI Req Type set to 2) had been sent for the said target mobile entity address:
- If yes then it may process the received ROI Reply by removing from its ROI cache the route optimization information corresponding to the mobile entity whose home address is indicated in the Home Address field of the ROI Reply,
- If no then it may send a new ROI Request message with ROI Req Type set to 1 for maintaining ROI Refreshment for the said target mobile entity.

### 5. Optimized Routing

A mobile entity may use information in its ROI cache for optimizing routing towards a target node. If the destination address of a packet to be sent (or forwarded) by the mobile node matches the home address or mobile network prefix of one of the ROI entry in the ROI cache, the mobile entity may tunnel the packet towards the care-of address indicated in the corresponding ROI entry, using IPv6 tunneling or other type of tunneling (e.g. UDP tunneling as needed, e.g. for IPv4 NAT traversal).

### 6. Security Consideration

The ROI Request message may be authenticated in one of the following ways:
- The mobile entity to home agent IPsec ESP authentication SA for integrity protection, as per [3].
- A mobile entity to home agent authentication option, such as [4].

ROI Reply and ROI Notify messages may be authenticated in one of the following ways:
- The home agent to mobile entity IPsec ESP authentication SA for integrity protection, as per [3].
- A home agent to mobile node authentication option, such as [4].

A node receiving a ROI Request, ROI Reply, or ROI Notify message may first authenticate the message prior to any other processing of the message and, if not correctly authenticated it may ignore the message.

### References

[1] V. Devarapalli et al, "Network Mobility (NEMO) Basic Support Protocol", RFC 3963, January 2005.
[2] D. Johnson et al., "Mobility Support in IPv6", RFC 3775, June 2004
[3] J. Arkko et al., "Using IPsec to Protect Mobile IPv6 Signaling between Mobile Nodes and Home Agents3, RFC 3776, June 2004.
[4] A. Patel et al., "Authentication Protocol for Mobile IPv6", RFC 4285, January 2006.

The sequences and methods shown and described herein can be carried out in a different order than those described. The particular sequences, functions, and operations depicted in the drawings are merely illustrative of one or more embodiments of the invention, and other implementations will be apparent to those of ordinary skill in the art. The drawings are intended to illustrate various implementations of the invention that can be understood and appropriately carried out by those of ordinary skill in the art. Any arrangement, which is calculated to achieve the same purpose, may be substituted for the specific embodiments shown.

The invention can be implemented in any suitable form including hardware, software, firmware or any combination of these. The invention may optionally be implemented partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor.

Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality.

## Claims

1. In a communication network (10, 12, 14) comprising at least one home agent (40, 50) and at least two mobile entities (20, 30), a method for route optimization between the mobile entities comprising the steps of:
determining an optimized route from a first mobile entity (20) to a second mobile entity (30) by a first home agent (40) serving said first mobile entity (20), wherein determining an optimized route comprises authorizing a request for route optimization information from the first mobile entity (20);
delivering the necessary route optimization information from the first home agent (40) to the first mobile entity (20) for the first mobile entity to be able to send data to the second mobile entity (30); and
configuring the first mobile entity (20), using the route optimization information, to enable routing of data packets from the first mobile entity (20) to the second mobile entity (20), bypassing the home agents (40,50) serving either of said first mobile entity (20) and second mobile entity (30).

2. The method of claim 1, wherein authorizing the request comprises the step of checking policy rules of the network by the first home agent (40) before allowing the route optimization to take place.

3. The method of claim 1, wherein the network includes a first (40) and second (50) home agent serving first (20) and second (30) mobile entities, respectively, and wherein the determining step includes determining an optimized route between the second and first mobile entity by the second home agent (50), the delivering step includes delivering the route optimization information from the second home agent (50) to the second mobile entity (30), and the configuring step includes configuring the second mobile entity (30) using the route optimization information to enable routing of data packets between the first and second mobile entities, bypassing the home agents.

4. The method of claim 3, further **characterized by** the step of triggering the provision of route optimization information to a mobile entity by its serving home agent, wherein the first home agent (40) sends a trigger to the second home agent (50).

5. The method of claim 3, further **characterized by** the step of triggering the provision of route optimization information to a mobile entity by its serving home agent, wherein the trigger is sent to the at least one home agent by the network (10, 12, 14).

6. The method of claim 5, wherein the triggering step is based on a geographic proximity of the first and second mobile entities (20, 30).

7. The method of claim 6, further **characterized by** the steps of:
successfully authorizing a request for route optimization information from the first mobile entity (20); and
sending a route optimization information reply to the first mobile entity (20) by the first home agent (40) using a security protocol.

8. The method of claim 1, further **characterized by**, when the first home agent (40) and a second home agent (50) serving the second mobile entity (30) are in different domains (12, 10), the step of discovering the second home agent (50) by the first home agent (40).

9. The method of claim 1, wherein at least two home agents (40, 50) serve the at least two respective mobile entities (20, 30), and wherein the:
determining step includes determining an optimized route between the mobile entities (20, 30) by the home agents; and further comprising the step of
triggering the provision of the route optimization information to each mobile entity (20, 30) by its respective home agent (40, 50); and wherein the
delivering step includes delivering the necessary route optimization information from each home agent (40, 50) to its respective mobile entity using a Mobile IP security protocol for the mobile entities to be able to exchange data; and the
configuring step includes configuring each mobile entity (20, 30) using the route optimization information to enable routing of data packets between the mobile entities bypassing both of the home agents (40, 50) for each communication direction.

10. The method of claim 9, wherein the route optimization information for one mobile entity (20, 30) includes one or more of the group of; a home address of the other mobile entity, a mobile network prefix of the other mobile entity if that entity is a mobile router, and a care-of address for the other mobile entity.

11. The method of claim 9, further **characterized by** the step of sending data packets from one mobile entity to another mobile entity, wherein the data packets are encapsulated twice, first in a tunnel bound to a home address of the other mobile entity, and second in a tunnel bound to a care-of address of the other mobile entity.

12. The method of claim 9, wherein the second mobile entity is a mobile node attached to a foreign agent, further comprising the step of sending data packets from one mobile entity to another mobile entity, wherein the data packets are bound to a foreign agent-based care-of address of the other mobile entity.

13. The method of claim 9, wherein the determining step comprises one of the group of; request route optimization information from a second home agent (50) of the second mobile entity, retrieving the route optimization information from a central database regularly updated with the bindings known by each home agent in the network, and from the home agent's own binding cache if the second mobile entity is served by the first home agent.

14. The method of claim 9, wherein the determining step includes route optimization information having a lifetime, which is the amount of time the route optimization information is considered valid by the network.

15. The method of claim 9, further **characterized by** the steps of:
the first mobile entity (20) moving to another visited network,
sending new route optimization information to the second home agent (50),
forwarding the route optimization information to the second mobile entity (30), and
maintaining a list of mobile entities using route optimization with the first mobile entity (20).

16. The method of claim 9, wherein, if the two mobile entities (20, 30) are being served by the same home agent, the triggering step is based on a proximity of the two mobile entities as determined by the home agent.

17. The method of claim 9, wherein, if the two mobile entities (20, 30) are being served by separate home agents within the same domain, the triggering step is based on a proximity of the two mobile entities as determined by a location tracking function of that domain.

18. The method of claim 9, wherein, if the two mobile entities (20, 30) are being served by separate home agents within different domains, the triggering step is based on a proximity of the two mobile entities as determined through a collaboration between location tracking functions of the respective domains.

19. The method of claim 9, wherein, if the two mobile entities (20, 30) are being served by separate home agents within different domains, the triggering step is based on a proximity of the two mobile entities as determined by direct communications between the home agents of the different domains.

20. A network (10, 12, 14) for route optimization between at least two mobile entities (20, 30), the network comprising at least two home agents (40, 50) serving the at least two respective mobile entities (20, 30); comprising:
the home agent (40,50) determining an optimized route between the mobile entities, wherein determining an optimized route comprises authorizing, by the home agent (40) serving the first mobile entity (20), a request for route optimization information from the first mobile entity (20), receiving a trigger to provide route optimization information to each respective mobile entity, and securely delivering the necessary route optimization information to their respective mobile entities for the mobile entities to be able to exchange data (20, 30); and
each mobile entity (20, 30) configuring itself, using the route optimization information, to enable routing of data packets between the mobile entities (20, 30), bypassing the two home agents (40, 50).

## Patentansprüche

1. In einem Kommunikationsnetzwerk (10, 12, 14), das mindestens einen Home Agent (40, 50) und mindestens zwei mobile Entitäten (20, 30) umfasst, Verfahren zur Routenoptimierung zwischen den mobilen Entitäten, das die folgenden Schritte umfasst:
Bestimmen einer optimierten Route von einer ersten mobilen Entität (20) zu einer zweiten mobilen Entität (30) durch einen ersten Home Agent (40), der die erste mobile Entität (20) versorgt, wobei ein Bestimmen einer optimierten Route ein Autorisieren einer Abfrage von Routenoptimierungsinformationen von der ersten mobilen Entität (20) umfasst;
Liefern der notwendigen Routenoptimierungsinformationen von dem ersten Home Agent (40) an die erste mobile Entität (20), damit die erste mobile Entität in der Lage ist, Daten an die zweite mobile Entität (30) zu senden; und
Konfigurieren der ersten mobilen Entität (20) unter Verwendung der Routenoptimierungsinformationen, um ein Weiterleiten von Datenpaketen von der ersten mobilen Entität (20) zu der zweiten mobilen Entität (20) zu ermöglichen, unter Umgehung der Home Agenten (40, 50), die die erste mobile Entität (20) oder die zweite mobile Entität (30) versorgen.

2. Verfahren gemäß Anspruch 1, wobei ein Autorisieren der Abfrage den Schritt eines Prüfens von allgemeinen Regeln des Netzwerkes durch den ersten Home Agent (40) umfasst, bevor die Routenoptimierung stattfinden darf.

3. Verfahren gemäß Anspruch 1, wobei das Netzwerk einen ersten (40) und zweiten (50) Home Agent umfasst, die die erste (20) beziehungsweise zweite (30) mobile Entität versorgen, und der Bestimmungsschritt ein Bestimmen einer optimierten Route zwischen der zweiten und ersten mobilen Entität durch den zweiten Home Agent (50) umfasst, wobei der Lieferschritt ein Liefern der Routenoptimierungsinformationen von dem zweiten Home Agent (50) zu der zweiten mobilen Entität (30) umfasst, und der Konfigurierungsschritt ein Konfigurieren der zweiten mobilen Entität (30) umfasst, unter Verwendung der Routenoptimierungsinformationen, um ein Weiterleiten von Datenpaketen zwischen der ersten und zweiten mobilen Entität zu ermöglichen, unter Umgehung der Home Agenten.

4. Verfahren gemäß Anspruch 3, weiterhin **gekennzeichnet durch** den Schritt eines Triggerns der Bereitstellung von Routenoptimierungsinformationen an eine mobile Entität **durch** ihren versorgenden Home Agent, wobei der erste Home Agent (40) einen Trigger an den zweiten Home Agent (50) sendet.

5. Verfahren gemäß Anspruch 3, weiterhin **gekennzeichnet durch** den Schritt eines Triggerns der Bereitstellung von Routenoptimierungsinformationen an eine mobile Entität **durch** ihren versorgenden Home Agent, wobei der Trigger an mindestens einen Home Agent **durch** das Netzwerk (10, 12, 14) gesendet wird.

6. Verfahren gemäß Anspruch 5, wobei der Schritt des Triggerns auf einer geographischen Nähe der ersten und zweiten mobilen Entität (20, 30) basiert.

7. Verfahren gemäß Anspruch 6, weiterhin durch die folgenden Schritte gekennzeichnet:
erfolgreiches Autorisieren einer Abfrage von Routenoptimierungsinformationen von der ersten mobilen Entität (20); und
Senden einer Routenoptimierungsinformationsantwort an die erste mobile Entität (20) durch den ersten Home Agent (40) unter Verwendung eines Sicherheitsprotokolls.

8. Verfahren gemäß Anspruch 1, weiterhin **gekennzeichnet durch**: wenn sich der erste Home Agent (40) und ein zweiter Home Agent (50), der die zweite mobile Entität (30) versorgt, in unterschiedlichen Domänen (12, 10) befinden, den Schritt eines Erkennens des zweiten Home Agent (50) **durch** den ersten Home Agent (40).

9. Verfahren gemäß Anspruch 1, wobei mindestens zwei Home Agenten (40, 50) die mindestens zwei jeweiligen mobilen Entitäten (20, 30) versorgen und wobei der:
Bestimmungsschritt ein Bestimmen einer optimierten Route zwischen den mobilen Entitäten (20, 30) durch die Home Agenten umfasst; und weiterhin den folgenden Schritt umfasst:
Triggern der Bereitstellung der Routenoptimierungsinformationen zu jeder mobilen Entität (20, 30) durch ihren jeweiligen Home Agent (40, 50); und wobei der
Lieferschritt ein Liefern der notwendigen Routenoptimierungsinformationen von jedem Home Agent (40, 50) an ihre jeweilige mobile Entität umfasst, unter Verwendung eines Mobile IP-Sicherheitsprotokolls, um zu ermöglichen, dass die mobilen Entitäten Daten austauschen können; und der
Konfigurierungsschritt ein Konfigurieren jeder mobilen Entität (20, 30) umfasst, unter Verwendung der Routenoptimierungsinformationen, um ein Weiterleiten von Datenpaketen zwischen den mobilen Entitäten zu ermöglichen, unter Umgehung beider Home Agenten (40, 50) für jede Kommunikationsrichtung.

10. Verfahren gemäß Anspruch 9, wobei die Routenoptimierungsinformationen für eine mobile Entität (20, 30) umfassen: eine Heimatadresse der anderen mobilen Entität, eine Mobilnetzwerkkennziffer der anderen mobilen Entität, wenn diese Entität ein mobiler Router und/oder eine per Adresse der anderen mobilen Entität ist.

11. Verfahren gemäß Anspruch 9, weiterhin **gekennzeichnet durch** den Schritt eines Sendens von Datenpaketen von einer mobilen Entität zu einer anderen mobilen Entität, wobei die Datenpakete zweimal eingekapselt sind, erstens in einem Tunnel, der an eine Heimatadresse der anderen mobilen Entität gebunden ist, und zweitens in einem Tunnel der an eine per Adresse der anderen mobilen Entität gebunden ist.

12. Verfahren gemäß Anspruch 9, wobei die zweite mobile Entität ein mobiler Knoten ist, der an einem Foreign Agent befestigt ist, das weiterhin den folgenden Schritt umfasst: Senden von Datenpaketen von einer mobilen Entität an eine andere mobile Entität, wobei die Datenpakete an eine Foreign Agent-basierte per Adresse der anderen mobilen Entität gebunden sind.

13. Verfahren gemäß Anspruch 9, wobei der Bestimmungsschritt umfasst: Abfrage von Routenoptimierungsinformationen von einem zweiten Home Agent (50) der zweiten mobilen Entität, oder Abrufen der Routenoptimierungsinformationen von einer zentralen Datenbank, die regelmäßig mit Bindungen aktualisiert wird, die jedem Home Agent in dem Netzwerk bekannt sind, und aus dem eigenen Bindungsspeicher des Home Agent, wenn die zweite mobile Entität durch den ersten Home Agent versorgt wird.

14. Verfahren gemäß Anspruch 9, wobei der Bestimmungsschritt umfasst, dass die Routenoptimierungsinformationen über eine Lebensdauer verfügen, die der durch das Netzwerk angenommenen Gültigkeit der Routenoptimierungsinformationen entspricht.

15. Verfahren gemäß Anspruch 9, weiterhin durch die folgenden Schritte gekennzeichnet:
Bewegen der ersten mobilen Entität (20) in ein anderes besuchtes Netzwerk,
Senden neuer Routenoptimierungsinformationen an den zweiten Home Agent (50),
Weiterleiten der Routenoptimierungsinformationen an die zweite mobile Entität (30), und
Unterhalten einer Liste von mobilen Entitäten, die eine Routenoptimierung mit der ersten mobilen Entität (20) verwenden.

16. Verfahren gemäß Anspruch 9, wobei, wenn die zwei mobilen Entitäten (20, 30) durch denselben Home Agent versorgt werden, der Schritt des Triggerns auf einer Nähe der zwei mobilen Entitäten basiert, so wie durch den Home Agent bestimmt.

17. Verfahren gemäß Anspruch 9, wobei, wenn die zwei mobilen Entitäten (20, 30) durch verschiedene Home Agenten innerhalb der selben Domäne versorgt werden, der Schritt des Triggerns auf einer Nähe der zwei mobilen Entitäten basiert, so wie durch eine Standortverfolgungsfunktion dieser Domäne bestimmt.

18. Verfahren gemäß Anspruch 9, wobei, wenn die zwei mobilen Entitäten (20, 30) durch verschiedene Home Agenten innerhalb verschiedener Domänen versorgt werden, der Schritt des Triggerns auf einer Nähe der zwei mobilen Entitäten basiert, so wie durch eine Zusammenarbeit zwischen lokalen Standortverfolgungsfunktionen der entsprechenden Domänen bestimmt.

19. Verfahren gemäß Anspruch 9, wobei, wenn die zwei mobilen Entitäten (20, 30) durch verschiedene Home Agenten innerhalb verschiedener Domänen versorgt werden, der Schritt des Triggerns auf einer Nähe der zwei mobilen Entitäten basiert, so wie durch direkte Kommunikationen zwischen den Home Agenten der verschiedenen Domänen bestimmt.

20. Netzwerk (10, 12, 14) zur Routenoptimierung zwischen mindestens zwei mobilen Entitäten (20, 30), wobei das Netzwerk mindestens zwei Home Agenten (40, 50) umfasst, die mindestens zwei entsprechende mobile Entitäten (20, 30) versorgen, umfassend, dass die Home Agenten (40, 50) eine optimierte Route zwischen den mobilen Entitäten bestimmen, wobei ein Bestimmen einer optimierten Route umfasst:
Autorisieren, durch den Home Agent (40), der die erste mobile Entität (20) versorgt, einer Abfrage von Routenoptimierungsinformationen von der ersten mobilen Entität (20), Empfangen eines Triggers, um Routenoptimierungsinformationen jeder entsprechenden mobilen Entität zur Verfügung zu stellen, und sicheres Liefern der notwendigen Routenoptimierungsinformationen an ihre entsprechenden mobilen Entitäten, so dass die mobilen Entitäten in der Lage sind, Daten (20, 30) auszutauschen; und
jede mobile Entität (20, 30) sich selbst konfiguriert, unter Verwendung der Routenoptimierungsinformationen, um ein Weiterleiten von Datenpaketen zwischen den mobilen Entitäten (20, 30) zu ermöglichen, unter Umgehung der zwei Home Agenten (40, 50).

## Revendications

1. Dans un réseau de communication (10, 12, 14) comprenant au moins un agent mère (40, 50) et au moins deux entités mobiles (20, 30), procédé pour l'optimisation de route entre les entités mobiles, comprenant les étapes consistant à :
déterminer une route optimisée d'une première entité mobile (20) à une seconde entité mobile (30) par un premier agent mère (40) desservant ladite première entité mobile (20), où la détermination d'une route optimisée comprend l'autorisation d'une demande d'informations d'optimisation de route en provenance de la première entité mobile (20) ;
remettre les informations d'optimisation de route nécessaires du premier agent mère (40) à la première entité mobile (20) pour que la première entité mobile soit en mesure d'envoyer des données à la seconde entité mobile (30) ; et
configurer la première entité mobile (20), en utilisant les informations d'optimisation de route, pour permettre le routage de paquets de données de la première entité mobile (20) à la seconde entité mobile (30), en contournant les agents mère (40, 50) desservant l'une ou l'autre de ladite première entité mobile (20) et de ladite seconde entité mobile (30).

2. Procédé selon la revendication 1, dans lequel l'autorisation de la demande comprend l'étape consistant à vérifier des règles de politique du réseau par le premier agent mère (40) avant de permettre que l'optimisation de route ait lieu.

3. Procédé selon la revendication 1, dans lequel le réseau inclut un premier (40) et un second (50) agent mère desservant une première (20) et une seconde (30) entité mobile, respectivement, et dans lequel l'étape de détermination inclut la détermination d'une route optimisée entre la seconde et la première entité mobile par le second agent mère (50), l'étape de remise inclut la remise des informations d'optimisation de route du second agent mère (50) à la seconde entité mobile (30), et l'étape de configuration inclut la configuration de la seconde entité mobile (30) en utilisant les informations d'optimisation de route pour permettre le routage de paquets de données entre les première et seconde entités mobiles, en contournant les agents mère.

4. Procédé selon la revendication 3, **caractérisé en outre par** l'étape consistant à déclencher la fourniture d'informations d'optimisation de route à une entité mobile par son agent mère de desserte, où le premier agent mère (40) envoie un déclencheur au second agent mère (50).

5. Procédé selon la revendication 3, **caractérisé en outre par** l'étape consistant à déclencher la fourniture d'informations d'optimisation de route à une entité mobile par son agent mère de desserte, où le déclencheur est envoyé au au moins un agent mère par le réseau (10, 12, 14).

6. Procédé selon la revendication 5, dans lequel l'étape de déclenchement est basée sur une proximité géographique des première et seconde entités mobiles (20, 30).

7. Procédé selon la revendication 6, **caractérisé en outre par** les étapes consistant à :
autoriser avec succès une demande d'informations d'optimisation de route en provenance de la première entité mobile (20) ; et
envoyer une réponse d'informations d'optimisation de route à la première entité mobile (20) par le premier agent mère (40) en utilisant un protocole de sécurité.

8. Procédé selon la revendication 1, **caractérisé en outre par**, lorsque le premier agent mère (40) et un second agent mère (50) desservant la seconde entité mobile (30) sont dans des domaines différents (12, 10), l'étape consistant à découvrir le second agent mère (50) par le premier agent mère (40).

9. Procédé selon la revendication 1, dans lequel au moins deux agents mère (40, 50) desservent les au moins deux entités mobiles (20, 30) respectives, et dans lequel :
l'étape de détermination inclut la détermination d'une route optimisée entre les entités mobiles (20, 30) par les agents mère ; et comprenant en outre l'étape consistant à
déclencher la fourniture des informations d'optimisation de route à chaque entité mobile (20, 30) par son agent mère (40, 50) respectif ; et dans lequel
l'étape de remise inclut la remise des informations d'optimisation de route nécessaires de chaque agent mère (40, 50) à son entité mobile respective en utilisant un protocole de sécurité IP mobile pour que les entités mobiles soient en mesure d'échanger des données ; et
l'étape de configuration inclut la configuration de chaque entité mobile (20, 30) en utilisant les informations d'optimisation de route pour permettre le routage de paquets de données entre les entités mobiles en contournant les deux agents mère (40, 50) pour chaque direction de communication.

10. Procédé selon la revendication 9, dans lequel les informations d'optimisation de route pour une entité mobile (20, 30) incluent un ou plusieurs du groupe comprenant : une adresse mère de l'autre entité mobile, un préfixe de réseau mobile de l'autre entité mobile si cette entité est un routeur mobile, et une adresse temporaire (care-of) pour l'autre entité mobile.

11. Procédé selon la revendication 9, **caractérisé en outre par** l'étape consistant à envoyer des paquets de données d'une entité mobile à une autre entité mobile, où les paquets de données sont encapsulés deux fois, premièrement dans un tunnel lié à une adresse mère de l'autre entité mobile, et deuxièmement un tunnel lié à une adresse temporaire de l'autre entité mobile.

12. Procédé selon la revendication 9, dans lequel la seconde entité mobile est un noeud mobile rattaché à un agent étranger, comprenant en outre l'étape consistant à envoyer des paquets de données d'une entité mobile à une autre entité mobile, où les paquets de données sont liés à une adresse temporaire basée sur l'agent étranger de l'autre entité mobile.

13. Procédé selon la revendication 9, dans lequel l'étape de détermination comprend un du groupe comprenant : la demande d'informations d'optimisation de route à un second agent mère (50) de la seconde entité mobile, la récupération des informations d'optimisation de route depuis une base de données centrale régulièrement mise à jour avec les liaisons connues de chaque agent mère dans le réseau, et depuis le propre cache de liaison de l'agent mère si la seconde entité mobile est desservie par le premier agent mère.

14. Procédé selon la revendication 9, dans lequel l'étape de détermination inclut des informations d'optimisation de route ayant une durée de vie, qui est la quantité de temps pendant laquelle les informations d'optimisation de route sont considérées comme valides par le réseau.

15. Procédé selon la revendication 9, **caractérisé en outre par** les étapes suivantes :
la première entité mobile (20) se déplaçant vers un autre réseau visité,
l'envoi de nouvelles informations d'optimisation de route au second agent mère (50),
le transfert des informations d'optimisation de route à la seconde entité mobile (30), et
le maintien d'une liste d'entités mobiles utilisant l'optimisation de route avec la première entité mobile (20).

16. Procédé selon la revendication 9, dans lequel, si les deux entités mobiles (20, 30) sont desservies par le même agent mère, l'étape de déclenchement est basée sur une proximité des deux entités mobiles telle que déterminée par l'agent mère.

17. Procédé selon la revendication 9, dans lequel, si les deux entités mobiles (20, 30) sont desservies par des agents mère distincts dans le même domaine, l'étape de déclenchement est basée sur une proximité des deux entités mobiles telle que déterminée par une fonction de suivi de localisation de ce domaine.

18. Procédé selon la revendication 9, dans lequel, si les deux entités mobiles (20, 30) sont desservies par des agents mère distincts dans des domaines différents, l'étape de déclenchement est basée sur une proximité des deux entités mobiles telle que déterminée par l'intermédiaire d'une collaboration entre les fonctions de suivi de localisation des domaines respectifs.

19. Procédé selon la revendication 9, dans lequel, si les deux entités mobiles (20, 30) sont desservies par des agents mère distincts dans des domaines différents, l'étape de déclenchement est basée sur une proximité des deux entités mobiles telle que déterminée par des communications directes entre les agents mère des domaines différents.

20. Réseau (10, 12, 14) pour l'optimisation de route entre au moins deux entités mobiles (20, 30), le réseau comprenant au moins deux agents mère (40, 50) desservant les au moins deux entités mobiles (20, 30) respectives ; comprenant :
les agents mère (40, 50) déterminant une route optimisée entre les entités mobiles, où la détermination d'une route optimisée comprend l'autorisation, par l'agent mère (40) desservant la première entité mobile (20), d'une demande d'informations d'optimisation de route en provenance de la première entité mobile (20), la réception d'un déclencheur pour fournir des informations d'optimisation de route à chaque entité mobile respective, et la remise sécurisée des informations d'optimisation de route nécessaires à leurs entités mobiles respectives pour que les entités mobiles soient en mesure d'échanger des données (20, 30) ; et
chaque entité mobile (20, 30) se configurant, en utilisant les informations d'optimisation de route, pour permettre le routage de paquets de données entre les entités mobiles (20, 30), en contournant les deux agents mère (40, 50).
